# EUROPÄISCHE PATENTSCHRIFT

(11) **EP 0 720 785 B1**
(45) Veröffentlichungstag und Bekanntmachung des Hinweises auf die Patenterteilung: **24.10.2001**
(21) Anmeldenummer: 95924947.5
(22) Anmeldetag: 28.06.1995
(51) Int. Cl.: H02K 17/30, H02K 19/36, H02K 29/00

(54) **ELEKTRISCHE MASCHINE**
ELECTRIC MOTOR
MOTEUR ELECTRIQUE

(30) Priorität: 28.06.1994 DE 4422623
(43) Veröffentlichungstag der Anmeldung: 10.07.1996
(73) Patentinhaber: Firma Eugenie Mühmel, 89073 Ulm (DE)
(72) Erfinder: BAUKNECHT, Günter, D-89073 Ulm (DE)
(74) Vertreter: Riebling, Peter, Dr.-Ing.
(86) Internationale Anmeldenummer: EP9502508
(87) Internationale Veröffentlichungsnummer: WO9601001

(56) Entgegenhaltungen:
- DE-A- 1 638 619
- DE-B- 1 638 415
- GB-A- 2 251 522
- GB-A- 2 251 552

## Beschreibung

Die Erfindung betrifft eine elektrische Maschine, umfassend ein Maschinengehäuse, einen in dem Maschinengehäuse um eine Rotorachse drehbar gelagerten Rotor, einen in dem Maschinengehäuse angeordneten Stator, eine dem Stator oder dem Rotor zugeordnete Wicklung und eine eine Felderzeugung in der Wicklung steuernde Steuerschaltung mit einem Gleichstromzwischenkreis und mindestens einem zwischen diesem und der Wicklung angeordneten Leistungssteller sowie einer Ansteuerung für den Leistungssteller, wobei alle die Felderzeugung in der Wicklung steuernden Leistungssteller in dem Maschinengehäuse angeordnet sind.

Derartige elektrische Maschinen sind vorzugsweise sogenannte umrichtergesteuerte Maschinen. Bei diesen wird über den Leistungssteller ein zur Felderzeugung in der Wicklung dienender Strom hinsichtlich Frequenz Amplitude und Phase gesteuert.

Bei diesen elektrischen Maschinen ist es bekannt, daß der Leistungssteller mitsamt der Ansteuerung außerhalb des Maschinengehäuses angeordnet ist.

Eine derartige Lösung hat den großen Nachteil, daß aufgrund der hohen, für die Felderzeugung in der Wicklung erforderlichen Ströme in den relativen langen Zuleitungen zu dem Maschinengehäuse große elektromagnetische Streufelder auftreten, die beispielsweise in anderen elektrischen Geräten zu Störungen führen, so daß entweder aufwendige Abschirmungsmaßnahmen erforderlich sind oder große Streufelder hingenommen werden müssen.

Aus der GB-A-2 251 522 ist eine elektrische Maschine gemäß dem Oberbegriff des Patentanspruchs 1 bekannt, bei der bereits alle die Felderzeugung in der Wicklung steuernden Leistungssteller in dem Maschinengehäuse angeordnet sind. Durch die kurzen Leitungswege zwischen Leistungssteller und Wicklungen werden die auftretenden elektromagnetischen Streufelder reduziert.

Der Erfindung liegt die Aufgabe zugrunde, eine elektrische Maschine zu schaffen, bei welcher die auftretenden Streufelder weiter reduziert werden können. Eine weitere Aufgabe besteht darin, das Verhältnis zwischen Leistung und Baugrösse bzw. Gewicht der Maschine zu verbessern.

Diese Aufgabe wird bei einer elektrischen Maschine der ein gangs beschriebenen Art erfindungsgemäß durch die kennzeichnenden Merkmale des Patentanspruchs 1 gelöst.

Diese Lösung hat den bereits angesprochenen Vorteil, daß durch die Anordnung der Leistungssteller in dem Maschinengehäuse die Streufelder, die durch die hohen, der Wicklung zuzuführenden Ströme entstehen, einerseits aufgrund der Kürze der Leitungen bereits wesentlich geringer sind und andererseits durch das Maschinengehäuse gegenüber der Umgebung abgeschirmt werden.

Weiterhin hat diese Lösung den großen Vorteil, daß mit dieser Aufteilung der Wicklung in vier oder mehr Teilwicklungen und die erfindungsgemäße Speisung der Teilwicklungen durch mindestens zwei oder mehr Stromkreise entweder die Möglichkeit geschaffen wird, die über jeden Stromkreis in die Wicklung einzuspeisenden Ströme zu reduzieren und damit Stromkreise kleiner dimensionieren zu können, wobei dieselbe Leistung der Elektromaschine wie bei der bekannten Stern- oder Dreieckschaltung erreichbar ist, allerdings nicht - wie bei der Stern- und Dreieckschaltung letztlich jeder Stromkreis auf den maximalen, in der Wicklung fließenden Strom und die maximale Spannung ausgelegt werden muß, oder die Möglichkeit besteht, bei gleicher Auslegung der Stromkreise die Leistung zu steigern.

Ein weiterer Vorteil dieser erfindungsgemäßen Lösung ist darin zu sehen, daß diese die Möglichkeit bietet, die Frequenz des Stroms oder der Spannung in den einzelnen Stromkreisen bei gleicher spezifischer Leistung des Stromkreises zu erhöhen, da eine Erhöhung der Frequenz von Strom und Spannung einen höheren Blindstrom in den Stromkreisen nach sich zieht, der aber bei Aufteilung auf mehrere Stromkreise technisch nicht zu Problemen führt.

Die Konsequenz hieraus ist, daß entweder die Polzahl der elektrischen Maschine erhöht werden kann, wenn man die gewünschte Drehzahl konstant läßt, oder bei gleicher Polzahl die Drehzahl gesteigert werden kann.

Die Steigerung der Frequenz von Strom und Spannung in den einzelnen Stromkreisen ist gegenüber dem konventionellen Drehstrommotor um einen Faktor möglich, welcher dem Quotient aus der Zahl der Ecken der Polygonschaltung dividiert durch drei entspricht.

Die beispielsweise damit mögliche Steigerung der Polzahl führt dazu. daß für ein gefordertes Drehmoment das Maschinengewicht reduziert werden kann.

Besonders vorteilhaft ist die erfindungsgemäße Lösung dann, wenn sich Polzahlen von mehr als acht als vorteilhaft erweisen, da diese ohne Probleme realisierbar sind, wohingegen beispielsweise bei konventionellen elektrischen Asynchronmaschinen in Stern- oder Dreieckschaltung bei Polzahlen von mehr als acht die Leistung der elektrischen Maschine abnimmt.

Es sind auch problemlos Polzahlen von mehr als 14, bei spielsweise von 28 bei einer sechseckigen Polygonschaltung, realisierbar

Besonders eignet sich die erfindungsgemäße Lösung dann, wenn die Wicklung mehrere Stränge aufweist und wenn zur Steuerung der Felderzeugung in jedem Strang für diesen mindestens ein Leistungssteller vorgesehen ist. Damit wird insbesondere die Problematik großer elektromagnetischer Streufelder bei viel strängigen Maschinen erheblich reduziert, da in diesem Fall bei einem außerhalb des Maschinengehäuses angeordneten Leistungssteller eine Vielzahl von hohe Ströme führenden Zuleitungen von den Leistungsstellern zu dem Maschinengehäuse und in dieses hineingeführt werden müssen.

Besonders kurze Wege zwischen den Leistungsstellern und der entsprechenden Wicklung, sei es im Stator oder im Rotor ergeben sich dann, wenn die Leistungssteller einzeln um die Rotorachse herum verteilt angeordnet sind, so daß einerseits eine optimale Raumausnutzung im Maschinengehäuse möglich ist und andererseits möglichst kurze, von dem jeweiligen Leistungssteller wegführende Verbindungsleitungen zu der Wicklung eingesetzt werden können.

Eine besonders günstige Raumausnutzung ergibt sich dann, wenn die Leistungssteller in gleichen Winkelabständen um die Rotorachse herum verteilt angeordnet werden können.

Für bestimmte geometrische Anordnungen könnten unterschiedliche radiale Abstände Verwendung finden. Zur Versorgung der Leistungssteller ist es jedoch besonders vorteilhaft, wenn die Leistungssteller in gleichem radialem Abstand von der Rotorachse angeordnet sind.

Rein theoretisch könnte für jeden Leistungssteller ein eigener Gleichstromzwischenkreis vorgesehen sein. Besonders vorteilhaft ist es jedoch, wenn alle Leistungssteller an demselben Gleichstromzwischenkreis angeordnet sind, so daß lediglich ein Gleichstromzwischenkreis in dem Maschinen gehäuse zu den einzelnen Leistungsstellern geführt werden muß.

Besonders einfach ist die Versorgung der einzelnen Leistungssteller über den Gleichstromzwischenkreis dann gelöst, wenn der Gleichstromzwischenkreis zwei um die Rotorachse zumindest teilweise umlaufend angeordnete und parallel zueinander verlaufende Leiterbügel umfaßt, an welchen die Leistungssteller angeschlossen sind. Eine derartige Ausgestaltung des Gleichstromzwischenkreises in dem Maschinengehäuse hat den großen Vorteil, daß dieser eine geringe Induktivität aufweist und somit bereits aus diesem Grund geringe Streufelder erzeugt.

Hinsichtlich der Raumausnutzung in der elektrischen Maschine hat es sich als besonders vorteilhaft erwiesen, wenn die Leiterbügel in einer senkrecht zur Rotorachse verlaufenden Ebene liegen, wobei entweder jeder Leiterbügel in einer derartigen Ebene liegt oder beide Leiterbügel in einer einzigen derartigen Ebene, so daß Verbindungen der Leistungssteller mit den Leiterbügeln möglichst einfach und mit möglichst kurzen Leitungswegen realisierbar sind.

Ferner hat es sich aus Gründen einer möglichst geringen Induktivität als vorteilhaft erwiesen; wenn die Leiterbügel als Flachleiter ausgebildet sind, wobei vorzugsweise die Breitseite der Flachleiter parallel zu der Ebene verläuft, in welcher sich diese erstrecken.

Eine optimale niederinduktive Ankopplung der Leistungssteller an den Leiterbügeln ist dann möglich, wenn die Leistungssteller Anschlüsse aufweisen, die direkt mit den Leiterbügeln verbunden sind.

Eine hinsichtlich des in den Leiterbügel zu führenden Stromes aufgrund des erforderlichen Querschnitts besonders günstige Lösung sieht vor, daß die Leiterbügel als in sich geschlossene Ringleiter ausgebildet sind, so daß ausgehend von einem Speiseanschluß für den jeweiligen Ringleiter der Strom in diesem in mehreren Richtungen fließen kann. Ferner haben sich derartige Ringleiter als sehr niederinduktive Leitungen erwiesen.

Eine besonders vorteilhafte Lösung sieht vor, daß die zwei Ringleiter konzentrisch zueinander angeordnet sind.

Eine weitere vorteilhafte Lösung sieht vor, daß die Leistungssteller auf einer Seite der Ebene angeordnet sind, in welcher die Leiterbügel liegen, so daß auch die Möglichkeit besteht, die Leistungssteller auf einer den Leiterbügeln gegenüberliegenden Seite möglichst effektiv zu kühlen.

Hinsichtlich der für eine Umrichtersteuerung erforderlichen Zwischenkreisspeicherkondensatoren wurden bislang keine näheren Angaben gemacht. So sieht ein besonders vorteilhaftes Ausführungsbeispiel vor, daß im Maschinengehäuse Zwischenkreisspeicherkondensatoren angeordnet sind, so daß aufgrund des Schaltens der Leistungssteller im Zwischenkreis auftretende Hochfrequenzanteile innerhalb des Maschinengehäuses von den Zwischenkreisspeicherkondensatoren blockiert werden und sich nicht auf die aus dem Maschinen gehäuse herausgeführten Zwischenkreiszuleitungen auswirken. Vorzugsweise sind diese Zwischenkreisspeicherkondensatoren an den Leiterbügeln angeschlossen, da diese Anordnung die Möglichkeit eröffnet, eine niederinduktive Verbindung zwischen dem Zwischenkreisspeicherkondensator und dem Leistungssteller zu schaffen.

Vorzugsweise ist dabei vorgesehen, daß jedem Leistungssteller ein Zwischenkreisspeicherkondensator zugeordnet ist, der zweckmäßigerweise mit seinen Anschlüssen möglichst nahe bei den Anschlüssen des Leistungsstellers sitzt um die Induktivität zu minimieren.

Eine besonders günstige Anordnung, insbesondere im Hinblick auf die Nähe zwischen den Anschlüssen des Leistungsstellers und des Zwischenkreisspeicherkondensators ist dann möglich, wenn auf der den Leistungsstellern gegenüberliegenden Seite der Ebene die Zwischenkreisspeicherkondensatoren sitzen.

Hinsichtlich der Anordnung der Stellersteuerung wurden im Zusammenhang mit der vorstehenden Erläuterung der einzelnen Ausführungsbeispiele keine näheren Angaben gemacht. So ist es prinzipiell möglich, die Stellersteuerung außerhalb des Maschinengehäuses anzuordnen, ohne daß große Streufelder entstehen, da von dieser zum Maschinengehäuse lediglich Steuerströme geführt werden müssen.

Allerdings ist die Führung einer Vielzahl von Leitungen zwischen dem Maschinengehäuse und der Stellersteuerung erforderlich, wenn eine Vielzahl von Leistungsstellern zum Einsatz kommt.

Aus diesem Grund sieht ein besonders kompaktes Ausführungs beispiel einer erfindungsgemäßen Lösung, bei welcher ebenfalls Probleme mit langen Steuerleitungen vermieden werden können, vor, daß die Stellersteuerung im Maschinengehäuse angeordnet ist.

Vorzugsweise ist auch bei dieser Lösung vorgesehen, daß die Stellersteuerung nahe der Leistungssteller angeordnet ist. Eine besonders günstige Möglichkeit der Anordnung der Stellersteuerung ist dann gegeben, wenn die Stellersteuerung in Zwischenräumen zwischen den Zwischenkreisspeicherkonden satoren angeordnet ist.

Ferner ist vorzugsweise vorgesehen, daß die Stellersteuerung nahe der Leiterbügel sitzt, da somit optimal kurze Wege zwischen der Stellersteuerung und den von dieser gesteuerten Leistungsstellern möglich sind.

Hinsichtlich der Frage der Kühlung der Leistungssteller wurden bislang keine näheren Angaben gemacht. Eine Kühlung der Leistungssteller bei den Ausführungen gemäß dem Stand der Technik ist insofern einfach zu realisieren, da diese unabhängig von der Kühlung von Rotor und Stator erfolgen kann.

Ein besonders vorteilhaftes Ausführungsbeispiel der erfindungsgemäßen Lösung sieht vor, daß die im Maschinengehäuse angeordneten Leistungssteller gekühlt sind, so daß als Schalter in den Leistungsstellern auch Halbleiter verwendet und bis zu maximal möglichen Strom belastet werden können.

Vorzugsweise ist dabei vorgesehen, daß die Leistungssteller einen Kühlkörper aufweisen. Dieser Kühlkörper könnte beispielsweise von in dem Maschinengehäuse verwirbelter Luft angeströmt und dadurch gekühlt sein.

Eine noch bessere Wärmeableitung ist jedoch dann möglich, wenn die Leistungssteller in thermischem Kontakt mit einem im Maschinengehäuse angeordneten Kühlelement stehen, da damit eine noch effizientere Wärmeableitung möglich ist.

Vorzugsweise ist dabei vorgesehen, daß das Kühlelement von einem flüssigen Kühlmedium durchströmt ist, da mit einer derartigen Kühlung größere Wärmemengen abführbar sind als mit Luftkühlung.

Eine besonders effektive Kühlung ist dann möglich, wenn die Leistungssteller einen Kühlkörper aufweisen, welcher in einen von dem flüssigen Kühlmedium durchströmten Kühlkanal des Kühlelements hineinragt.

Da die Leistungssteller nicht nur gekühlt, sondern auch mechanisch fest in dem Maschinengehäuse gehalten sein sollten, ist vorteilhafterweise vorgesehen, daß die Leistungssteller in dem Maschinengehäuse von dem Kühlelement gehalten sind, wobei das Kühlelement somit einen Träger für die Leistungssteller bildet, der seinerseits am Maschinengehäuse gehalten ist. Besonders vorteilhaft ist es dabei, wenn das Kühlelement Teil des Maschinengehäuses ist, so daß eine mechanisch integrierte Lösung vorliegt; bei welcher das Kühlelement nicht nur in der Lage ist, die Leistungssteller zu kühlen, sondern auch gleichzeitig das Maschinengehäuse zu kühlen.

Besonders vorteilhaft ist es dabei, wenn das Kühlelement durch einen Wandbereich des Maschinengehäuses gebildet ist, wobei als Wandbereich vorzugsweise das Lagerschild des Maschinengehäuses verwendbar ist, da dieses sich zur gleichzeitigen Ausbildung als Kühlelement sehr gut eignet.

Eine besonders vorteilhafte Montage des erfindungsgemäßen Leistungsstellers im Kühlelement sieht vor, daß der Leistungssteller eine Abdeckung für eine Öffnung des Kühlkanals im Kühlelement bildet und somit in einfacher Weise so montiert werden kann, daß der Kühlkörper von dem den Kühlkanal durchströmenden Kühlmedium umströmt ist.

Eine besonders günstige Lösung sieht vor, daß das Kühlelement in einen Kühlkreislauf des Stators integriert ist, so daß gleichzeitig mit der Kühlung der Leistungssteller auch noch eine Kühlung des Stators durch einen einzigen Kühlkreislauf realisierbar ist.

Vorzugsweise ist die erfindungsgemäße Maschine so ausgebildet, daß die über die Leistungssteller gespeiste Wicklung die Statorwicklung ist.

In diesem Fall hat es sich im Hinblick auf einen Zusammenbau der Maschine als besonders vorteilhaft erwiesen, wenn die Leistungssteller zwischen dem Stator und der Rotorachse sitzen, da in diesem Fall bei herausgenommenen Rotor in einfacher Weise eine Verbindung zwischen den Leistungsstellern und der im Stator sitzenden Wicklung hergestellt werden kann.

Besonders günstig ist dies, wenn die Leistungssteller radial innerhalb einer Statorbohrung sitzen.

Die Zugänglichkeit zu den Leistungsstellern bei der Montage kann noch weiter dadurch verbessert werden, wenn diese innerhalb einer Rotorwicklung sitzen.

Bislang wurde die Art der verwendeten Leistungsstellern nicht näher spezifiziert. So ist vorteilhafterweise vorgesehen, daß die Leistungssteller mindestens einen Leistungsstellerblock umfassen, wobei jeder Leistungsstellerblock einen Mittelabgriff und zwischen dem Mittelabgriff und der positiven Speisespannung des Zwischenkreises sowie dem Mittelabgriff und der negativen Speisespannung des Zwischen kreises mindestens einen oder mehrere parallel gesteuerte Schalter, insbesondere Halbleiter aufweist und der Mittelabgriff mit dem Speiseanschluß für den jeweiligen Strang oder die jeweilige Teilwicklung der Wicklung verbunden ist.

Es besteht die Möglichkeit, daß ein Leistungssteller mehrere Leistungsstellerblöcke umfaßt, von denen jeder zur Speisung einer Teilwicklung oder eines Strangs dient, besonders vorteilhaft ist es jedoch, wenn jeder Leistungssteller nur einen Leistungsstellerblock umfaßt und somit die für jede Teilwicklung oder jeden Strang erforderlichen Leistungsstellerblöcke in der vorstehend beschriebenen erfindungsgemäßen Weise in dem Maschinengehäuse angeordnet sind.

Um bei einem Ausführungsbeispiel der erfindungsgemäßen Maschine ein möglichst symmetrisches Polfeld zu erzeugen hat es sich als besonders vorteilhaft erwiesen, wenn in jedem Stromkreis der Strom im wesentlichen gleichmäßig auf die beiden Sätze von Teilwicklungen der Wicklung verteilt ist.

Ferner ist es für die Kraftwirkungen zwischen Rotor und Stator vorteilhaft, wenn in der Polygonschaltung einander gegenüberliegende Teilwicklungen im wesentlichen dieselbe Reaktanz aufweisen und mit im wesentlichen denselben Kräften wirken, was sich am einfachsten dadurch realisieren läßt, daß in der Polygonschaltung einander gegenüberliegende Teilwicklungen im wesentlichen gleich ausgebildet sind.

Besonders einfach ist der Aufbau einer Maschine dann, wenn alle Teilwicklungen der Wicklung im wesentlichen gleich ausgebildet sind, das heißt im wesentlichen dieselbe Reaktanz aufweisen und mit denselben Kräften wirken.

Hinsichtlich der Lage der einzelnen Teilwicklungen wurden im Zusammenhang mit der bisherigen Erläuterung einzelner vorteilhafter Ausführungsbeispiele keine näheren Angaben gemacht. So ist vorteilhafterweise vorgesehen, daß die Teilwicklungen so gewickelt sind, daß in der Polygonschaltung einander gegenüberliegende Teilwicklungen in nebeneinander liegenden Polnuten des Stators bzw. des Rotors liegen. Damit läßt sich ein besonders vorteilhafter Aufbau des Polfeldes realisieren.

Ferner ist es in Weiterbildung dieser Lösung besonders zweckmäßig, wenn die Teilwicklungen so in den Stator bzw. den Rotor eingewickelt sind, daß in einer Umlaufrichtung der Polygonschaltung betrachtet die auf eine ausgewählte Teilwicklung folgende Teilwicklung in den Polnuten neben den Polnuten der der ausgewählten Teilwicklung gegenüberliegenden Teilwicklung liegt.

Alternativ zu der vorstehend beschriebenen Anordnung der Teilwicklungen ist vorgesehen, daß die Teilwicklungen so in den Stator gewickelt sind, daß in der Polygonschaltung aufeinanderfolgende Teilwicklungen in nebeneinanderliegenden Polnuten liegen.

Insbesondere ist es bei einem derartigen Aufbau der Teilwicklungen möglich, diese so in den Stator bzw. den Rotor einzuwickeln, daß in der Polygonschaltung einander gegenüberliegende Teilwicklungen jeweils unterschiedliche Hälften des Stators bzw. des Rotors durchsetzen und sich zusammen zu einer den Stator bzw. den Rotor vollständig durchsetzenden Teilwicklung ergänzen.

Alternativ dazu ist es möglich, daß die Teilwicklungen so in den Stator bzw. den Rotor eingewickelt sind, daß einander gegenüberliegende Teilwicklungen in gemeinsamen Polnuten liegen.

Hinsichtlich der Positionierung von Anfang und Ende der in der Polygonschaltung aufeinanderfolgenden Teilwicklungen wurden bei der bisherigen Erläuterung von Ausführungsbeispielen keine näheren Angaben gemacht. So könnte beispielsweise vorgesehen sein, Anfang und Ende aller in der Polygonschaltung aufeinanderfolgender Teilwicklungen in einem kleinen Statorbereich bzw. Rotorbereich, welcher einer oder zwei Polteilungen entspricht, zu positionieren. Dies wäre beispielsweise dann sinnvoll, wenn die Zuleitungen zu den Teilwicklungen aus der erfindungsgemäßen Asynchronmaschine herausgeführt werden sollen.

Besonders vorteilhaft, insbesondere für eine getrennte Speisung der Teilwicklungen und die getrennte Anordnung der einzelnen Stromkreise in der erfindungsgemäßen Maschine ist es, wenn Anfang und Ende in der Polygonschaltung aufeinanderfolgender Teilwicklungen um ganzzahlige Zahlen von Polteilungen der Wicklung gegeneinander versetzt sind.

Eine gleichmäßige Verteilung von Anfang und Ende aufeinanderfolgender Teilwicklungen ist dann erreichbar, wenn Anfang und Ende in der Polygonschaltung aufeinanderfolgender Teilwicklungen um mindestens die ganzzahlige Zahl von Polteilungen der Wicklung versetzt sind, die der nächstkleineren ganzen Zahl des Quotienten aus der Polzahl und der Zahl der Stränge entspricht.

Ferner ist es zusätzlich als weiteres Kriterium noch vorteilhaft, wenn Anfang und Ende in der Polygonschaltung aufeinanderfolgender Teilwicklungen um höchstens die ganzzahlige Zahl von Polteilungen versetzt sind, die der nächstgrößeren ganzen Zahl des Quotienten aus Polzahl und Zahl der Stränge entspricht.

Hinsichtlich der Teilwicklungen wurden bislang keine detaillierten Aussagen gemacht. Insbesondere wurde nicht spezifiziert, inwiefern die Teilwicklung einem Strang der Wicklung entspricht oder lediglich Teil eines Strangs der Wicklung ist. Eine vorteilhafte Lösung sieht dabei vor, daß jede Teilwicklung der Wicklung einen Strang derselben bildet. Alternativ dazu ist es aber ebenfalls denkbar, daß zwei in der Polygonschaltung einander gegenüberliegende Teilwicklungen einen Strang bilden.

Die Stränge der Wicklung hängen mit dem Polfeld dahingehend zusammen, daß jeder Strang in jedem Pol zum Aufbau des Polfeldes in derselben Weise beiträgt oder anders ausgedrückt jeder Strang in einer Polteilung mit derselben Zahl von Windungen vorkommt.

Hinsichtlich der Art der Ströme, die durch die Stromkreise fließen wurden ebenfalls bislang noch keine näheren Angaben gemacht. So ist vorteilhafterweise vorgesehen, daß die Ströme in allen Stromkreisen dieselbe Periodendauer aufweisen.

Ferner ist es vorteilhaft, wenn die Ströme in allen Stromkreisen dieselbe Halbwellenform aufweisen.

Ferner ist vorzugsweise vorgesehen, um die Wirkung der einzelnen Stromkreise möglichst gleich zu halten, so daß die Ströme in allen Stromkreisen im wesentlichen dieselbe Maximalamplitude aufweisen.

Um eine Bewegung des Polfeldes relativ zur Wicklung zu erhalten ist vorzugsweise vorgesehen, daß der sich periodisch ändernde Strom in einem ausgewählten Stromkreis gegenüber dem Strom in einem nächstliegenden Stromkreis phasenverschoben ist.

Die Phasenverschiebung kann in vielfältiger Weise ausgewählt werden. Besonders vorteilhaft ist es, wenn der sich periodisch ändernde Strom in einem ausgewählten Stromkreis gegenüber dem Strom in einem nächstliegenden Stromkreis um einen Phasenwinkel von 360° geteilt durch die Anzahl der Teilwicklungen phasenverschoben ist.

Der sich periodisch ändernde Strom in den einzelnen Stromkreisen könnte prinzipiell ein periodischer Rechteckstrom sein. Besonders vorteilhaft ist es jedoch, wenn die in allen Stromkreisen der Polygonschaltung fließenden Ströme einen derartigen Zeitverlauf aufweisen, daß zu jedem Zeitpupkt in mindestens einem der Stromkreise die zeitliche Ableitung des Stroms ungleich Null ist, das heißt, daß sich zu jedem Zeitpunkt der Strom in mindestens einem der Stromkreise ändert, was dazu führt, daß sich das Polfeld auch zu jedem Zeitpunkt um die Rotorachse herum bewegt.

Vorzugsweise ist hierzu vorgesehen, daß die Halbwellenform der Ströme in den Stromkreisen so gewählt ist, daß der ansteigende und der abfallende Flankenbereich der Halbwelle zusammen über einen Phasenwinkel von mindestens 360° geteilt durch die Anzahl der Teilwicklungen verlaufen.

Vorzugsweise sind der ansteigende Flankenbereich und der absteigende Flankenbereich gleich ausgebildet und verlaufen jeweils mindestens über einen Phasenwinkel von mindestens 360° geteilt durch die 2-fache Anzahl der Teilwicklungen.

Hierbei wäre es auch denkbar, als Halbwellenform eine Sinushalbwelle zu verwenden.

Die magnetische Durchflutung jedes einzelnen Zahns kann jedoch dann gesteigert werden, wenn die Halbwellenform einen ansteigenden und einen abfallenden Flankenbereich und einen dazwischenliegenden verbreiterten Maximalbereich aufweist.

Hierbei wäre es beispielsweise auch denkbar, daß der Maximalbereich zwei durch den ansteigenden und den abfallenden Flankenbereich begrenzte Maxima und ein dazwischen liegendes kleines Minimum mit ungefähr 80% des Maximalwertes, noch besser ungefähr 90% des Maximalwertes, aufweist.

Als besonders vorteilhaft hat es sich erwiesen, wenn die Halbwellenform trapezähnlich ausgebildet ist, so daß der Maximalbereich zwischen der im wesentlichen linear ansteigenden und im wesentlichen linear absteigenden Flanke im wesentlichen konstant verläuft.

Der Maximalbereich erstreckt sich vorzugsweise über einen Phasenwinkel von maximal 360° geteilt durch die halbe Anzahl der Teilwicklungen.

Besonders vorteilhaft für die erfindungsgemäße Maschine hat es sich erwiesen, wenn durch den Leistungssteller in dem Stromkreis ein eingeprägter Strom vorgebbar ist und sich die Spannung entsprechend dem eingeprägten Strom frei einstellt, da in diesem Fall vermieden werden kann, daß beispielsweise bei blockierter Maschine gefährliche Überströme in den Wicklungen auftreten.

Vorzugsweise ist in jedem Stromkreis an jedem Speiseanschluß ein Leistungssteller vorgesehen, so daß die beiden in jedem Stromkreis liegenden Leistungssteller durch eine gemeinsame Stellersteuerung angesteuert sind.

Noch vorteilhafter ist es, wenn sämtliche Leistungssteller aller Stromkreise durch eine gemeinsame Stellersteuerung angesteuert sind.

Bei der erfindungsgemäßen Maschine ist die Wicklung vorzugsweise die Statorwicklung, da diese im ruhenden System liegt und daher am einfachsten gespeist werden kann.

Die erfindungsgemäße Lösung läßt sich besonders vorteilhaft bei Asynchronmaschinen, vorzugsweise bei Traktionsmotoren von Kraftfahrzeugen, einsetzen.

Ferner ist der Rotor, aus Gründen des einfacheren Aufbaus, vorzugsweise mit einer Kurzschlußwicklung versehen, obwohl auch andere Wicklungsarten denkbar wären.

Weitere Merkmale und Vorteile der Erfindung sind Gegenstand der nachfolgenden Beschreibung sowie der zeichnerischen Darstellung einiger Ausführungsbeispiele.

In der Zeichnung zeigen:
- Fig. 1: eine perspektivische Ansicht eines ersten Ausführungsbeispiels eines erfindungsgemäßen Asynchronmotors mit teilweise weggebrochenem Rotor und weggebrochenem Zwischenkreis für die Leistungssteller;
- Fig. 2: einen halbseitigen Querschnitt durch das erste Ausführungsbeispiel des erfindungsgemäßen Asynchronmotors;
- Fig. 3: einen Schnitt längs Linie 3-3 in Fig. 2;
- Fig. 4: ein Schaltungsschema zur Speisung einer Statorwicklung des erfindungsgemäßen Asynchronmotors;
- Fig. 5: ein vereinfachtes Wicklungsschema für einen Strang der Statorwicklung;
- Fig. 6: die Verschaltung von Anfängen und Enden der einzelnen Stränge;
- Fig. 7: einen Schnitt längs Linie 7-7 in Fig. 2 mit teilweise weggebrochenem Steller;
- Fig. 8: eine schematische Darstellung von Strömen eines ersten Stromkreises durch eine erfindungsgemäße Statorwicklung;
- Fig. 9: eine schematische Darstellung der Ströme ähnlich Fig. 8 für einen zweiten Stromkreis;
- Fig. 10: eine schematische Darstellung der Ströme ähnlich Fig. 8 für einen dritten Stromkreis;
- Fig. 11: eine ausschnittsweise abgewickelte Darstellung von einzelnen Zähnen des Stators mit dem aufgebauten Polfeld;
- Fig. 12: eine schematische Darstellung einzelner Zähne des Stators ähnlich Fig. 11 und des sich dabei aufgebauten Polfeldes zu einem Zeitpunkt, zu dem in einem der Stromkreise der Strom 0 fließt;
- Fig. 13: eine schematische Darstellung der Gesamtströme aufgrund aller drei Stromkreise in der erfindungsgemäßen Statorwicklung sofern in allen drei Stromkreisen der Maximalstrom I fließt;
- Fig. 14: eine schematische Darstellung der gesamten Ströme in der erfindungsgemäßen Statorwicklung sofern in einem Stromkreis der Strom 0 und in den anderen zwei Stromkreisen der Strom I fließt;
- Fig. 15: eine Darstellung des Zeitverlaufs der in den drei Stromkreisen fließenden Ströme gemäß einer ersten Möglichkeit;
- Fig. 16: eine schematische Darstellung des Zeitverlaufs des Stroms der in allen drei Stromkreisen verlaufenden Ströme über der Zeitachse gemäß der bevorzugten Ausführungsform;
- Fig. 17: eine schematische Polygonschaltung für ein zweites Ausführungsbeispiel;

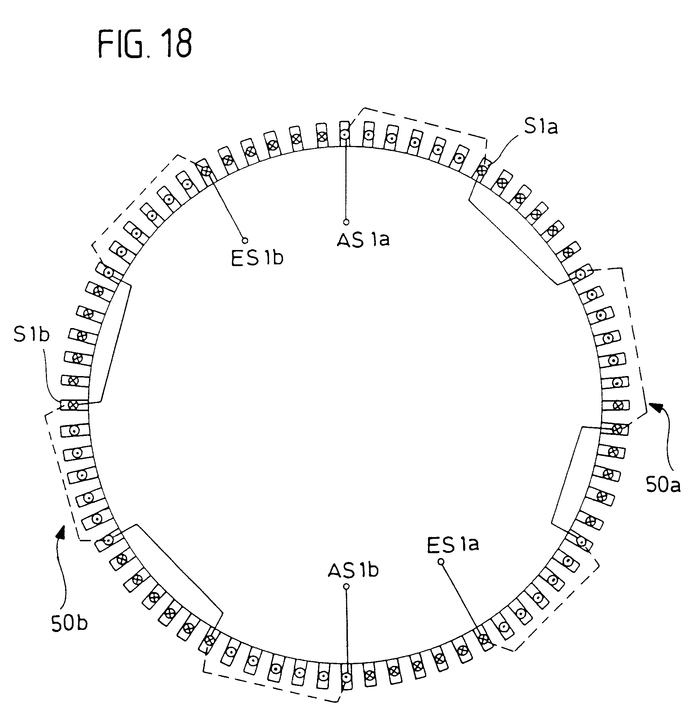

- Fig. 18: eine schematische vereinfachte Darstellung der Durchschleifung zweier Teilwicklungen bei dem zweiten Ausführungsbeispiel und

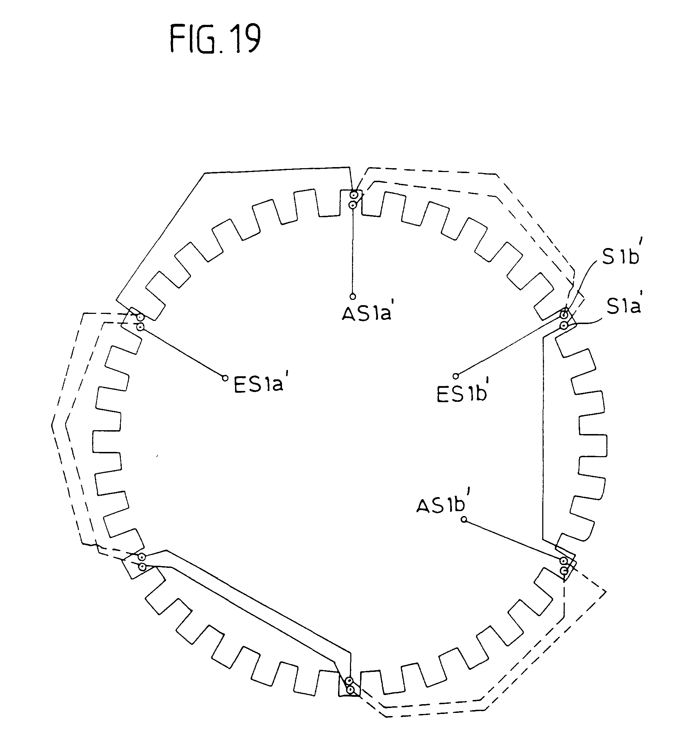

- Fig. 19: eine schematische Darstellung der Durchschleifung zweier Teilwicklungen bei einem dritten Ausführungsbeispiel gemäß Fig. 17.

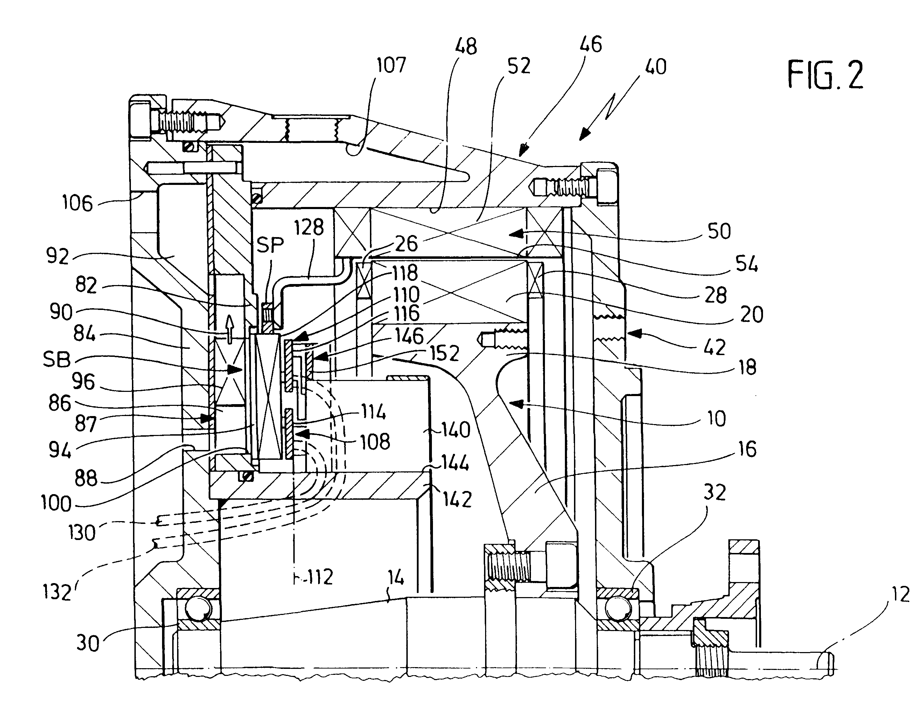

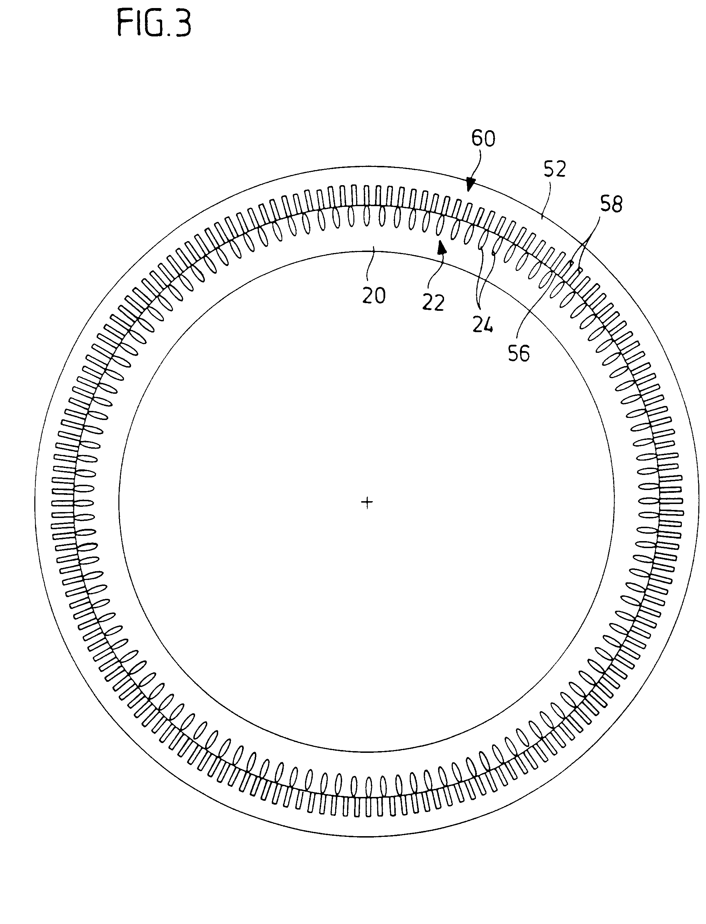

Ein Ausführungsbeispiel einer erfindungsgemäßen Elektromaschine ist als Asynchronmotor aufgebaut und umfaßt, wie in Fig. 2 dargestellt, einen Rotor 10 mit einer um eine Rotorachse 12 drehbaren Rotorwelle 14, welche einen Rotorflansch 16 trägt, der seinerseits an seinem radial außenliegenden Ende als Tragschulter 18 ausgeformt ist, auf welcher ein als Ganzes mit 20 bezeichneter Wicklungsring sitzt, in welchem, wie in Fig. 3 dargestellt, eine als Ganzes mit 22 bezeichnete Rotorwicklung sitzt, die als Kurzschlußwicklung ausgebildet ist und parallel zur Rotorachse 12 verlaufende und in Ausnehmungen liegende Wicklungsstäbe 24 aufweist, die jeweils stirnseitig mit jeweils einem Kurzschlußring 26 bzw. 28 kurzgeschlossen sind.

Der Rotor 10 ist seinerseits vorzugsweise über als Wälzlager ausgebildete Lager 30 und 32 gegenüber einem als Ganzes mit 40 bezeichneten Maschinengehäuse gelagert, welches ein vorderes Lagerschild 42 und ein hinteres Lagerschild 44 umfaßt sowie einen zwischen den Lagerschilden 42 und 44 liegenden äußeren Gehäusemantel 46, welcher fest mit den beiden Lagerschilden 42 und 44 verbunden ist.

An dem Gehäusemantel 46 ist auf einer Innenseite 48 ein als Ganzes mit 50 bezeichneter Stator gehalten, welcher einen Wicklungsring 52 aufweist, der an der Innenseite 48 des Gehäusemantels 46 fixiert ist und den Wicklungsring 20 des Rotors 10 mit einem geringen dazwischenliegenden Luftspalt 54 umgreift.

Wie in Fig. 3 dargestellt, sind von einer inneren Zylinderfläche 56 des Wicklungsrings 52 ausgehend in diesem Polnuten 58 vorgesehen, durch welche die als Ganzes mit 60 bezeichnete Statorwicklung hindurchverläuft.

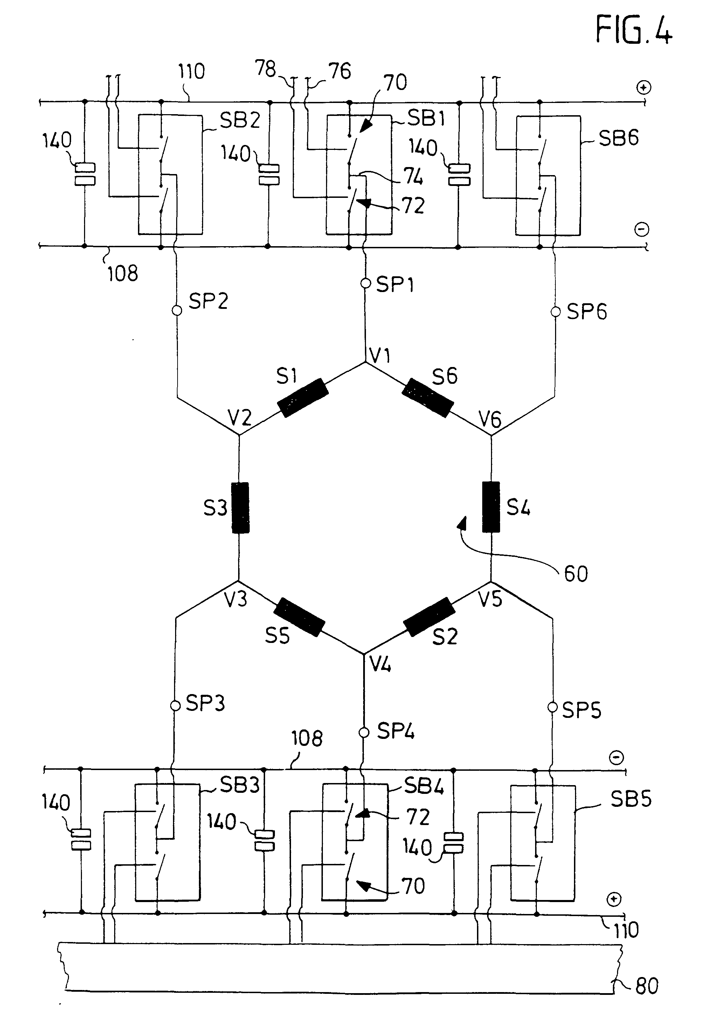

Die Statorwicklung 60 umfaßt, wie in Fig. 4 dargestellt, insgesamt sechs Stränge S1, S2, S3, S4, S5 und S6. Alle diese Stränge S1 bis S6 sind in Form einer Polygonschaltung zusammengeschaltet, wobei Ecken der Polygonschaltung als Verknüpfungspunkte V1 bis V6 der Stränge S1 bis S6 ausgebildet sind und jeweils zwischen zwei in der Polygonschaltung aufeinanderfolgenden Verknüpfungspunkten V einer der Stränge S1 bis S6 liegt. So liegt beispielsweise zwischen den Verknüpfungspunkten V1 und V2 der Strang S1, zwischen den Verknüpfungspunkten V2 und V3 der Strang S3, zwischen den Verknüpfungspunkten V3 und V4 der Strang S5, zwischen den Verknüpfungspunkten V4 und V5 der Strang S2, zwischen den Verknüpfungspunkten V5 und V6 der Strang S4 und zwischen den Verknüpfungspunkten V6 und V1 der Strang S6.

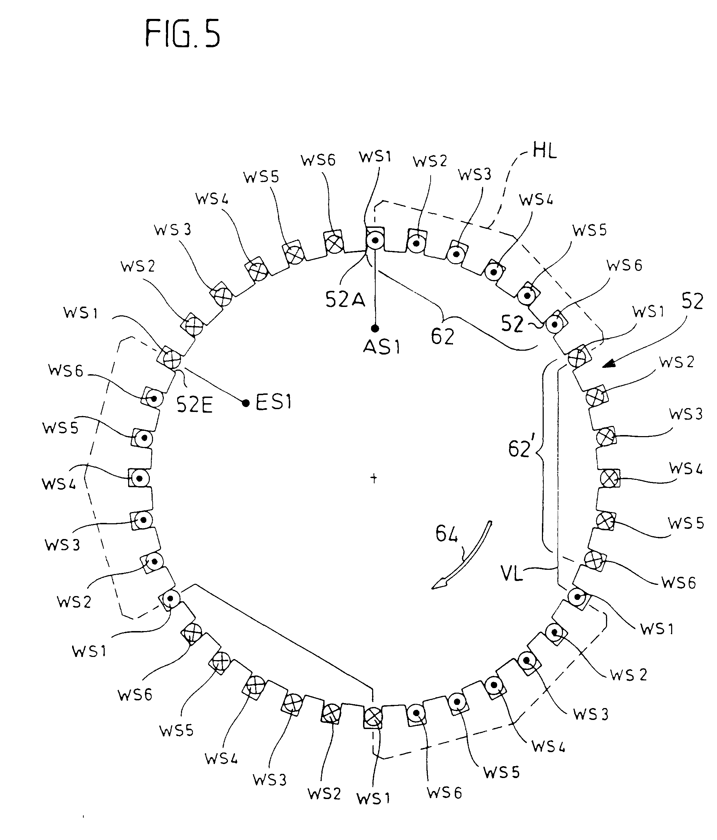

Jeder der Stränge S ist, wie in Fig. 5 anhand eines vereinfachten Wicklungsrings 52 mit weniger Polnuten 58 als in der Realität vorhanden, dargestellt. Dabei liegen die Windungen WS einander in der Polygonschaltung gegenüberliegender Stränge S nebeneinander. So folgt auf die Windung WS1 des Strangs S1 die Windung WS2 des Strangs S2, auf diese die Windung WS3 des Strangs S3, dann die Wicklung WS4 des Strangs S4, die Windung WS5 des Strangs S6 und schließlich die Windung WS6 des Strangs S6, wobei alle diese aufeinanderfolgenden Windungen WS1 bis WS6 beispielsweise zu einem bestimmten Zeitpunkt in derselben Richtung stromdurchflossen sind. Alle diese in den nebeneinanderliegenden Polnuten 52 liegenden Windungen WS1 bis WS6 der Stränge S1 bis S6 bilden gemeinsam einen als Polteilung 62 des Stators 50 bezeichneten Winkelsektor der Statorwicklung 60.

Nach einer derartigen Polteilung 62 wiederholt sich die Abfolge der in aufeinanderfolgenden Polnuten 52 liegenden Windungen WS1 bis WS6 in Form einer weiteren Polteilung 62', wobei in dieser weiteren Polteilung 62' die sechs nebeneinanderliegenden Windungen WS1 bis WS6 der Stränge S1 bis S6 in umgekehrter Richtung zur vorhergehenden Polteilung 62 stromdurchflossen sind, wie in Fig. 5 zeichnerisch dargestellt ist.

Auf diese Polteilung 62' folgt wiederum eine Polteilung mit in gleicher Richtung wie der Polteilung 62 stromdurchflossenen und in aufeinanderfolgende Polnuten 52 nebeneinanderliegenden WS1 bis WS6.

Diese Polteilungen 62 und 62' folgen so lange alternierend, bis nach einem Umlauf im Wicklungsring 52 sich die letzte Polteilung 62' an die erste Polteilung 62 anschließt. Das dargestellte Ausführungsbeispiel weist insgesamt 28 Polteilungen 62, 62' auf, so daß sich ein Polfeld mit 28 Polen erzeugen läßt.

Die Windungen WS1 in aufeinanderfolgenden Polteilungen sind durch beiderseits des Wicklungsrings 52 angeordnete hintere Verbindungsleitungen HL und vordere Verbindungsleitungen VL so miteinander verbunden, daß in aufeinanderfolgenden Polteilungen 62, 62' in jeweils derselben Windung WS1 der Strom in Richtung der Rotorachse 12 gesehen jeweils in umgekehrten Richtungen fließt, wie in Fig. 5 am Beispiel der Windungen WS1 in den aufeinanderfolgenden Polteilungen 62 und 62' angedeutet.

Die Windungen WS1 des Strangs S1 sind an für die Verbindung mit den Verknüpfungspunkten V1 und V2 geeigneten Stellen des Wicklungsrings 52 herausgeführt, wobei dies zwischen aufeinanderfolgenden Polteilungen 62 und 62' prinzipiell an beliebiger Wickelposition im Wicklungsring 52 erfolgen kann. Beispielsweise liegt in Fig. 5 der Anfang AS1 des Strangs S1 in einer Polnut 52A und damit ein Ende ES1 des Strangs S1 in Wicklungsrichtung 64 des Strangs S1 gesehen in der Polnut 52E, welche gegenüber der Polnut 52A um sechs Polnuten entgegengesetzt zur Wicklungsrichtung 64 versetzt liegt.

Die übrigen Stränge S2 bis S6 sind in analoger Weise in den Wicklungsring 52 eingewickelt, wobei die Wicklungsrichtung der Stränge S1, S3 und S5 der Wicklungsrichtung 64 entspricht, während die Wicklungsrichtung der Stränge S6, S4 und S2 entgegengesetzt zur Wicklungsrichtung 64 verläuft.

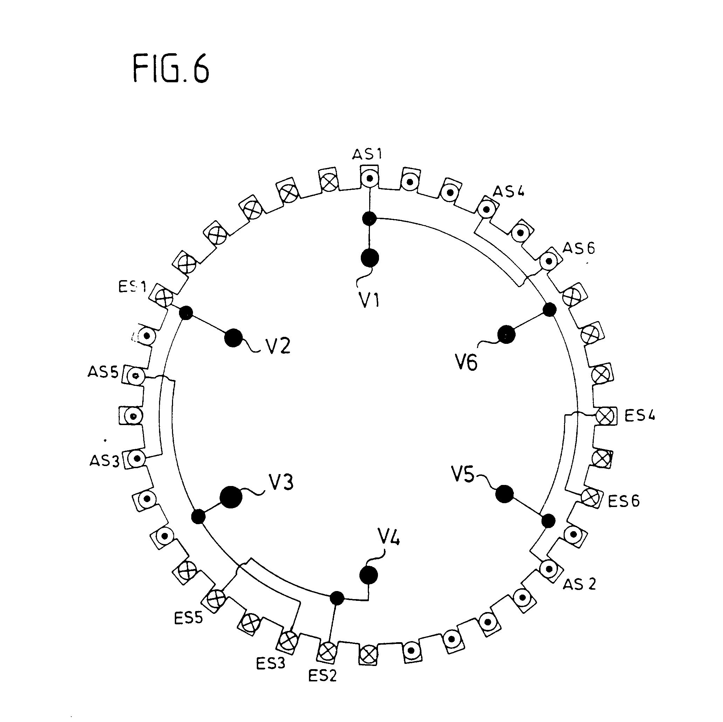

Darüber hinaus sind Anfang und Ende der einzelnen Stränge S1 bis S6 so gelegt, daß sie möglichst nahe bei dem jeweiligen Verknüpfungspunkt V liegen. So liegen beispielsweise, wie in Fig. 6 dargestellt, die Anfänge AS1 und AS6 der Stränge S1 und S6 nahe beim Verknüpfungspunkt V1, der Anfang AS3 des Strangs S3 und das Ende ES1 des Strangs S1 nahe beim Verknüpfungspunkt V2, der Anfang AS5 des Strangs S5 und das Ende ES3 des Strangs S3 nahe beim Verknüpfungspunkt V3, das Ende ES5 und das Ende ES2 nahe beim Verknüpfungspunkt V4, der Anfang AS2 des Strangs S2 und das Ende ES4 des Strangs S4 nahe beim Verknüpfungspunkt V5 und das Ende ES6 des Strangs S6 und der Anfang AS4 des Strangs S4 nahe beim Verknüpfungspunkt V6.

Die Speisung der einzelnen Stränge S1 bis S6 erfolgt nun, wie in Fig. 4 dargestellt, über den einzelnen Verknüpfungspunkten V1 bis V6 zugeordnete Speiseanschlüsse SP1 bis SP6 mit Leistungsstellerblöcken SB1 bis SB6 verbunden, wobei jedem der Speiseanschlüsse SP1 bis SP6 der entsprechende Leistungsstellerblock SB1 bis SB6 zugeordnet ist.

Jeder der Leistungsstellerblöcke SB1 bis SB6 umfaßt zwei Schalter 70 und 72, wobei mit dem Schalter 70 ein Mittelabgriff 74 mit einer positiven Zwischenkreisspannung + und mit dem Schalter 72 der Mittelabgriff 74 mit einer negativen Zwischenkreisspannung - verbindbar ist und der Mittelabgriff 74 wiederum mit dem jeweiligen Speiseanschluß SP direkt verbunden ist.

Bei den Schaltern 70 und 72 handelt es sich vorzugsweise um Halbleiterschalter, welche über Steuerleitungen 76 und 78 ansteuerbar sind.

Alle Steuerleitungen 76 und 78 jedes der Leistungsstellerblöcke SB1 bis SB6 sind zu einer gemeinsamen, als Ganzes mit 80 bezeichneten Stellersteuerung geführt und werden von dieser gemeinsam angesteuert.

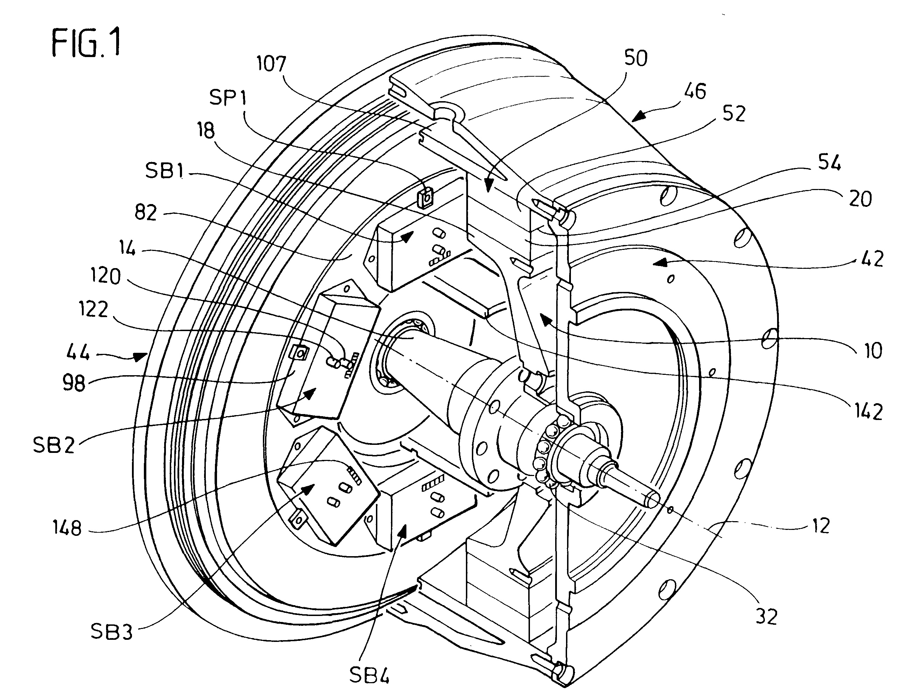

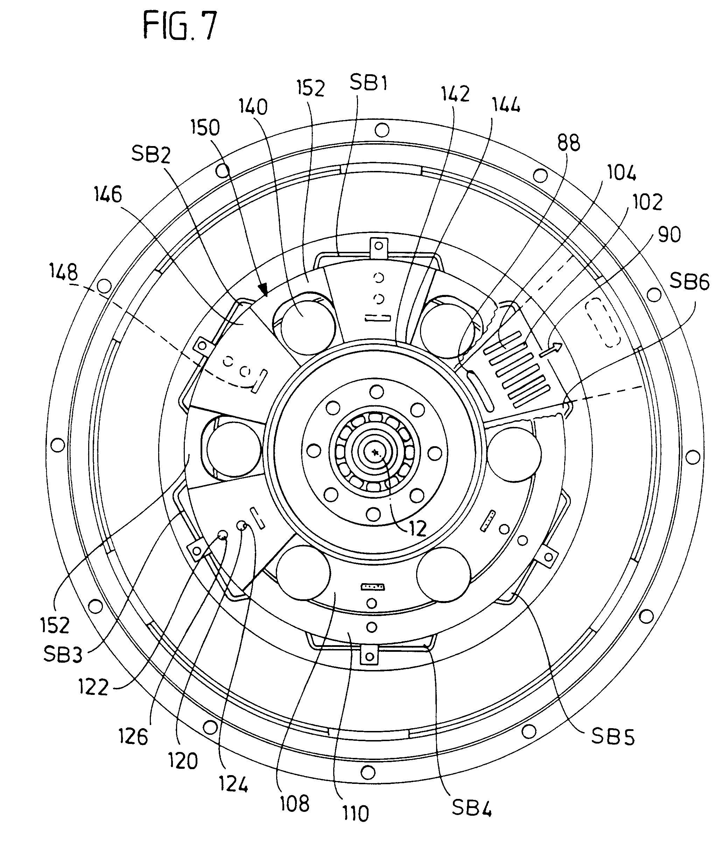

Wie aus Fig. 4 erkennbar, ist die gesamte Statorwicklung 60 somit über insgesamt 6 Leistungsstellerblöcke SB1 bis SB6 gespeist. Hierzu sind, wie in den Fig. 1, 2 und 7 erkennbar, die Leistungsstellerblöcke SB1 bis SB6 in gleichem radialem Abstand von der Rotorachse 12 und um diese herum angeordnet, wobei alle Leistungsstellerblöcke SB1 bis SB6 an einer Wand 82 des hinteren Lagerschildes 44 sitzen, und zwischen dieser Wand 82 und einer Rückwand 84 des hinteren Lagerschildes 44 ein Kühlmittelkanal 86 vorgesehen ist, welcher von einem in eine definierte Richtung strömenden Kühlmittel durchströmt ist. Die Wand 82, die Rückwand 84 und der Kühlmittelkanal 86 bilden gemeinsam ein Kühlelement 87.

Vorzugsweise verläuft der Kühlmittelkanal 86 in einer radialen Richtung zur Rotorachse 12 und ist mit einem radial innenliegenden Kühlmitteleinlaß 88 versehen, von welchem ausgehend dann das Kühlmittel in radialer Richtung 90 nach außen zu einem Sammelkanal 92 führt, von welchem ausgehend dann das gesammelte Kühlmittel, beispielsweise durch einen Kühlmittelauslaß abströmt.

Jeder der Leistungsstellerblöcke SB umfaßt einen Montageflansch 94, und, einen auf einer Seite des Montageflansches 94 sitzenden Kühlkörper 96, der thermisch mit den Schaltern 70 und 72 gekoppelt ist, und ein auf der dem Kühlkörper 96 gegenüberliegenden Seite des Montageflansches 94 sitzenden Schaltungskörper 98, in welchem elektronische Bauelemente des Leistungsstellerblocks LSB untergebracht und vorzugsweise zum Schutz in einem Vergußblock vergossen sind.

Damit jeder Leistungsstellerblock SB mit seinem Kühlkörper 96 in den Kühlmittelkanal 68 eintauchen kann, ist die Wand 82 am Sitz jedes Leistungsstellerblocks SB mit einem Durchbruch 100 versehen, welcher mittels des Montageflansches 94 eines an der Wand 82 montierten Leistungsstellerblocks SB kühlmitteldicht verschließbar ist, so daß der Kühlmittelkanal seitig des Montageflansches 94 angeordnete Kühlkörper 96 voll in dem Kühlmittelkanal 86 liegt und von dem Kühlmittel in der Strömungsrichtung 90 desselben umströmt ist, wobei vorzugsweise der Kühlkörper 96 noch mit parallel zur Strömungsrichtung 90 des Kühlmittels verlaufenden Rippen 102 und dazwischenliegenden Nuten 104 versehen, durch welche das Kühlmittel in Richtung seiner Strömungsrichtung 90 hindurchströmt.

Vorzugsweise ist zumindest für jeden Leistungsstellerblock LSB ein separater Kühlmitteleinlaß 88 vorgesehen, so daß jeder der Leistungsstellerblöcke SB mit Kühlmittel definierter Temperatur anströmbar ist, während beispielsweise die Abfuhr des Kühlmittels über den rings umlaufenden Sammelkanal 92 und einen gemeinsamen Auslaß 106 erfolgen kann.

Eine Stromversorgung der einzelnen Leistungsstellerblöcke SB erfolgt über zwei konzentrisch zur Rotorachse 12 angeordnete Ringleiter 108 und 110, welche aus Flachmaterial hergestellt sind, und in einer senkrecht zur Rotorachse 12 verlaufenden Ebene 112 liegen, wobei deren Flachseiten 114 und 116 parallel zu der Ebene 112 verlaufen. Die Ringleiter 108 und 110 liegen dabei auf einer dem Montageflansch 94 abgewandten Oberseite 118 des Schaltungskörpers 98 der Leistungsstellerblöcke SB auf und sind mit von dem Schaltungskörper 98 abstehenden Anschlußzapfen 120 und 122 verbunden, wobei die Anschlußzapfen 120 und 122 zweckmäßigerweise Bohrungen 124 bzw. 126 in den Ringleitern 108 bzw. 110 durchgreifen und mit diesen verschraubbar sind.. Die Ringleiter 108 und 110 werden daher über die Leistungsstellerblöcke SB von der Wand 82 des hinteren Lagerschildes 44 getragen.

Der Ringleiter 108 liegt dabei beispielsweise auf der negativen Zwischenkreisspannung -, während der Ringleiter 110 auf der positiven Zwischenkreisspannung + liegt.

Die Ausbildung der Stromzuführung zu den Leistungsstellerblöcken SB über die Ringleiter 108 und 110 hat den großen Vorteil, daß mit diesen Ringleitern 108 und 110 ein Zwischenkreis mit niedriger Induktivität gebildet werden kann.

Die Stromeinspeisung in die beiden Ringleiter 108 und 110 erfolgt über aus dem Maschinengehäuse 40, vorzugsweise dem hinteren Lagerschild 44 desselben, nahe des Lagers 30 herausgeführte Zwischenkreiszuleitungen 130 bzw. 132, die mit den Ringleitern 108 bzw. 110 verbunden sind. Vorzugsweise sind zur Reduzierung des Querschnittes derartiger Zwischenkreiszuleitungen 130 und 132 für jeden der Ringleiter 108 bzw. 110 mehrere, in gleichen Winkelabständen mit den Ringleitern 108 bzw. 110 verbundene Zwischenkreiszuleitungen 130 bzw. 132 vorgesehen, welche zu jeweils einem gemeinsamen Zwischenkreisspeiseanschluß außerhalb des Maschinengehäuses 40 geführt sind.

Zur Glättung des in den Ringleitern 108 bzw. 110 fließenden Stromes ist jedem Leistungsstellerblock SB mindestens ein Zwischenkreisspeicherkondensator 140 zugeordnet, welcher auf einer dem jeweiligen Leistungsstellerblock SB gegenüberliegenden Seite der Ebene 112 sitzt und ebenfalls mit den Ringleitern 108 bzw. 110, vorzugsweise möglichst nahe der Anschlußzapfen 120 bzw. 122 des jeweiligen Leistungsstellerblocks SB, verbunden ist. Eine bevorzugte Anordnung sieht vor, daß die Zwischenkreisspeicherkondensatoren 140 seitlich des jeweiligen Leistungsstellerblocks SB sitzen, so daß deren Anschlüsse auf Lücke zwischen zwei aufeinanderfolgenden Leistungsstellerblöcken SB mit den Ringleitern 108 bzw. 110 verbindbar sind.

Die Zwischenkreisspeicherkondensatoren 140 sind dabei durch einen von dem hinteren Lagerschild 44 ins Innere des Maschinengehäuses 40 hineinragenden Ringflansch 142 gegen Vibrationen abgestützt, welcher eine zylindrisch zur Rotorachse 12 umlaufende Stützfläche 144 aufweist, auf welcher die Zwischenkreisspeicherkondensatoren 140 fixiert sind.

Darüber hinaus ist die Stellersteuerung 80 in einer oder in mehreren Schaltungsblöcken 146 angeordnet, welche jeweils auf der einem Leistungsstellerblock SB gegenüberliegenden Seite der Ebene 112 zwischen den Zwischenkreisspeicherkondensator 140 und ebenfalls durch die Stützfläche 144 abgestützt sind. Eine Verbindung zwischen den Leistungsstellerblöcken SB und den Schaltungsblöcken 146 erfolgt dabei über eine Steckerleiste 148, welche einen der Ringleiter, beispielsweise den Ringleiter 108 durchgreift.

Die die Stellersteuerung 80 bildenden Schaltungsblöcke 146 sitzen vorzugsweise auf einer gemeinsamen Grundplatte 150, welche mit Stegen 152 die Zwischenkreisspeicherkondensatoren 140 übergreift.

Vorzugsweise ist die Stellersteuerung 80 aus einer der Zahl der Leistungsstellerblöcke SB entsprechenden Zahl von Schaltungsblöcken 146 ausgebildet, die auf einer ringförmig um die Rotorachse 10 umlaufenden Grundplatte 150 sitzen. Die Grundplatte sitzt dabei auf der den Leistungsstellerblöcken SB gegenüberliegenden Seite der Ebene 112 und liegt auf den Ringleitern 108 und 110 auf.

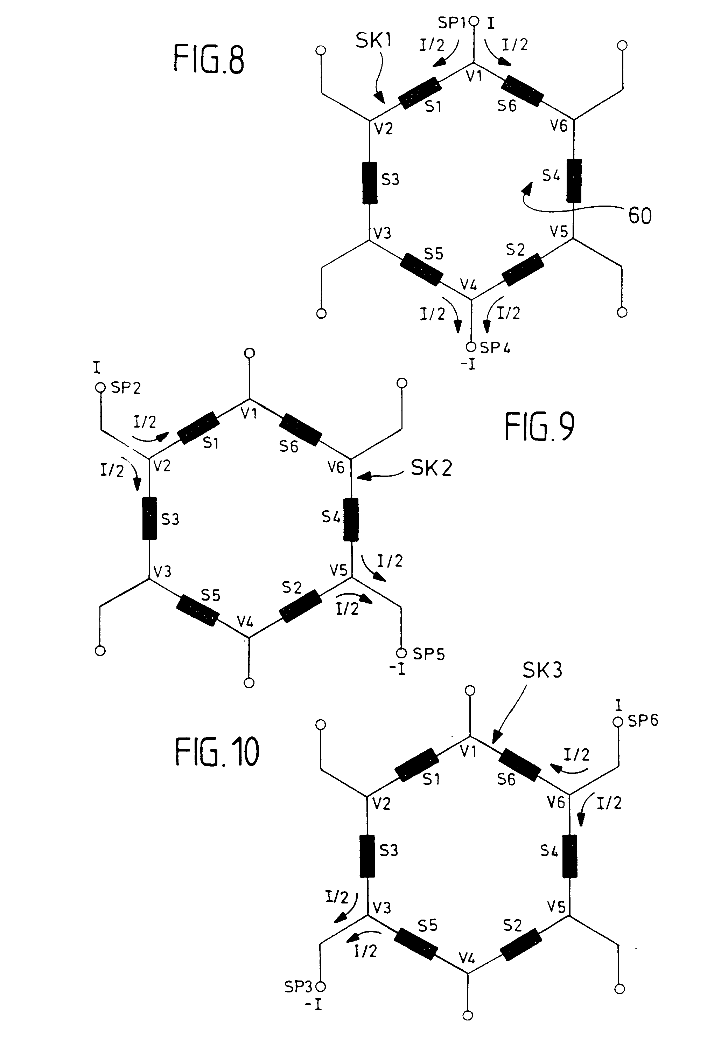

Die Speisung der als Ganzes mit 60 bezeichneten Statorwicklung über die Leistungsstellerblöcke SB erfolgt nun, wie in Fig. 8, 9 und 10 dargestellt, derart, daß einander gegenüberliegenden Verknüpfungspunkte V jeweils in einem gemeinsamen Stromkreis SK liegen und die Stromkreise gegeneinander getrennt sind. Dies erfolgt durch entsprechende Ansteuerung der Schalter 70 und 72 aller Leistungsstellerblöcke SB mittels der Stellersteuerung 80 in der gewünschten Art und Weise.

Beispielsweise werden die Leistungsstellerblöcke SB1 und SB4 so gesteuert, daß durch den Speiseanschluß SP1 ein Strom I in die Statorwicklung 60 fließt. Dieser Strom I teilt sich am Verknüpfungspunkt V1 auf in zwei Teilströme I/2, wobei der erste Teilstrom I/2 über den Strang S1, den Verknüpfungspunkt V2, den Strang S3, den Verknüpfungspunkt V3 und den Strang S5 zum Verknüpfungspunkt V4 fließt, während der zweite Strom I/2 über den Strang S6, den Verknüpfungspunkt V6, den Strang S4, den Verknüpfungspunkt V5 und den Strang S2 zum Verknüpfungspunkt V4 fließt. Dort addieren sich die Ströme I/2 wieder zum Strom minus I, welcher über den Speiseanschluß SP4 fließt. In diesem Fall ist der Schalter 70 des Leistungsstellerblocks SB1 geschlossen, der Schalter 72 dieses Leistungsstellerblocks SB1 geöffnet, während der Schalter 72 des Leistungsstellerblocks SB4 geschlossen ist und der Schalter 70 des Leistungsstellerblocks SB4 geöffnet.

In diesem als SK1 bezeichneten Stromkreis bilden die Stränge S1, S3 und S5 einen Satz hintereinander geschalteter Stränge, während die Stränge S6, S4 und S2 ebenfalls einen Satz hintereinander geschalteter Stränge bilden und die beiden Sätze ihrerseits bezogen auf die Speiseanschlüsse SP1 und SP4 parallel geschaltet sind.

Wird nun in gleicher Weise, wie in Fig. 8 dargestellt, über den Speiseanschluß SP2 ein Strom I der Statorwicklung 60 zugeführt, so teilt sich dieser Strom I am Verknüpfungspunkt V2 in zwei Teilströme I/2 auf, wobei einer der Teilströme I/2 über den Strang S3 zum Verknüpfungspunkt V3, den Strang S5 zum Verknüpfungspunkt V4 und den Strang S2 zum Verknüpfungspunkt V5 fließt, während der andere Teilstrom I/2 über den Strang S1 zum Verknüpfungspunkt V1, den Strang S6 zum Verknüpfungspunkt V6 und den Strang S4 ebenfalls zum Verknüpfungspunkt V5 fließt und in dem Verknüpfungspunkt V5 sich die beiden Ströme I/2 wieder zum Strom minus I addieren, welcher durch den Speiseanschluß SP5 fließt. Somit wird hierdurch ein Stromkreis SK2 gebildet.

Ferner wird ein Stromkreis SK3 dadurch gebildet, daß über den Speiseanschluß SP6 ein Strom I zum Verknüpfungspunkt V6 fließt, sich dort ebenfalls in zwei Teilströme I/2 aufteilt, wobei ein erster Teilstrom I/2 über den Strang S6 zum Verknüpfungspunkt V1, von dort über den Strang S1 zum Verknüpfungspunkt V2 und über den Strang S3 zum Verknüpfungspunkt V3 fließt.

Der andere Strom I/2 fließt über den Strangs S4 zum Verknüpfungspunkt V5, von dort über den Strang S2 zum Verknüpfungspunkt V4 und schließlich über den Strang S5 zum Verknüpfungspunkt V3. Im Verknüpfungspunkt V3 addieren sich wieder die beiden Ströme I/2 zum Strom minus I, welcher durch den Speiseanschluß SP3 fließt.

Die Leistungsstellerblöcke SB sind nun alle so geschaltet, daß durch alle drei Stromkreis SK1, SK2 und SK3 ein periodischer Wechselstrom mit vorzugsweise gleicher Periodizität Amplitude und Halbwellenform fließt, allerdings sind die Wechselströme relativ zueinander phasenversetzt.

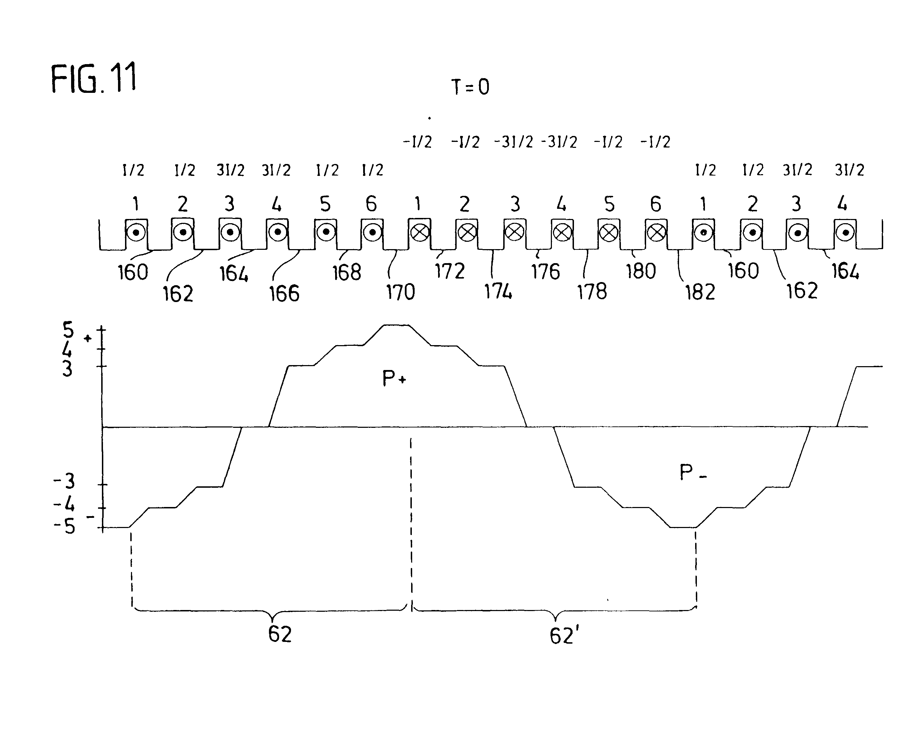

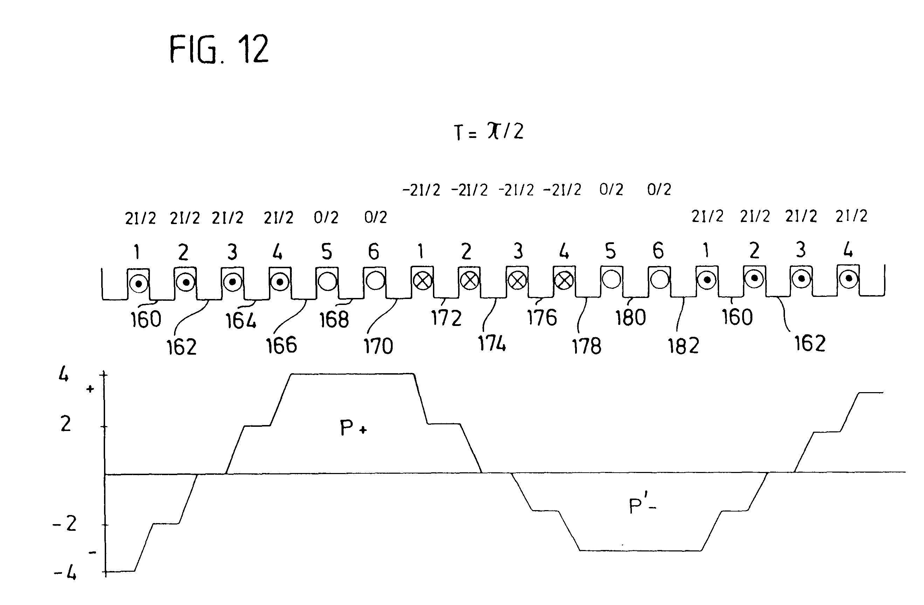

Durch die erfindungsgemäße Verwendung dreier voneinander getrennter Stromkreise SK1, SK2 und SK3 läßt sich in der Statorwicklung 60 ein Polfeld aufbauen, wobei dieses Polfeld, wie in den Fig. 11 und 12 dargestellt, unterschiedliche Formen aufweisen kann.

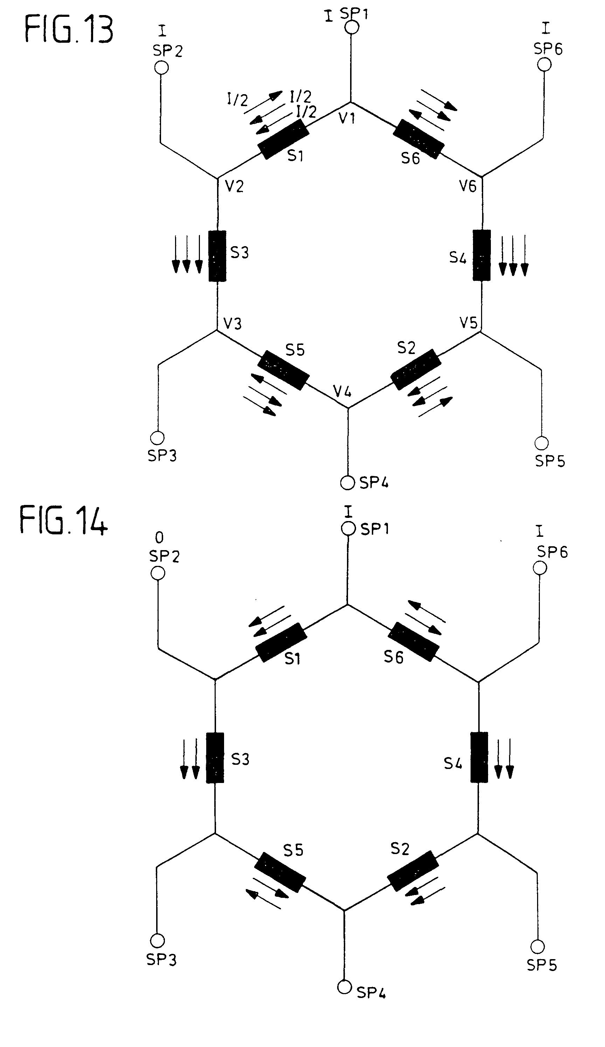

Ausgehend von dem Fall, daß zu einem Zeitpunkt T=0 in allen drei Stromkreisen SK1 bis SK3 der Strom I fließt, so ergibt sich, wie in Fig. 13 dargestellt, daß in dem Strang S1 aufgrund der Stromkreise SK1 und SK3 zweimal der Strom I/2 vom Verknüpfungspunkt V1 in Richtung des Verknüpfungspunkts V2 fließt, während aufgrund des Stromkreises SK2 einmal der Strom I/2 vom Verknüpfungspunkt V2 zum Verknüpfungspunkt V1 fließt, so daß insgesamt, wie in Fig. 11 dargestellt durch den Strang S1 der Strom I/2 fließt.

Gleiches gilt für den Strang S2.

Durch den Strang S3 fließt aufgrund aller drei Stromkreise SK1, SK2 und SK3 dreimal der Strom I/2 vom Verknüpfungspunkt V2 zum Verknüpfungspunkt V3. Gleiches gilt für den Strang S4.

Durch den Strang S5 fließt aufgrund der Stromkreise SK1 und SK2 zweimal der Strom I/2 vom Verknüpfungspunkt V3 zum Verknüpfungspunkt V4, während aufgrund des Stromkreises SK3 einmal der Strom I/2 vom Verknüpfungspunkt V4 zum Verknüpfungspunkt V3 fließt, so daß durch den Strang S5 insgesamt der Strom I/2 fließt.

Die gleiche Überlegung gilt für den Strang S6.

Betrachtet man nun die Durchflutung der einzelnen Zähne 160 bis 182 zweier aufeinanderfolgender Polteilungen 62 und 62' des Wicklungsrings 52 des Stators 50, so addieren sich die Durchflutungen des Zahns 160 zu -4I, die Durchflutungen des Zahns 162 zu -3I, die Durchflutungen des Zahns 164 zu 0I, die Durchflutungen des Zahns 166 zu 3I, die Durchflutungen des Zahns 168 zu 4I und die Durchflutungen des Zahns 170 zu 5I, die Durchflutungen des Zahns 172 zu 4I, die Durchflutungen des Zahns 174 zu 3I, die Durchflutungen des Zahns 176 zu OI, die Durchflutungen des Zahns 178 zu -3I, die Durchflutungen des Zahns 180 zu -4I und die Durchflutungen des Zahns 182 zu -5I, wie in Fig. 11 dargestellt.

Aus der Summe der in Fig. 11 dargestellten magnetischen Durchflutungen ergibt sich Form und Stärke der einzelnen Pole des Polfeldes. So liegt zwischen dem Zahn 164 und dem Zahn 176 ein positiver Pol P+, während zwischen dem Zahn 176 und dem Zahn 164 ein negativer Pol P- liegt.

Um nun das Polfeld mit den Polen P+ und P- um die Rotorachse 12 im Stator 50 umlaufen zu lassen, wird die Stromrichtung in einem der Stromkreise SK1 bis SK3 zunächst 0 gesetzt und dann umgepolt.

Ist beispielsweise der Strom im Stromkreis SK2 gleich 0, so ergibt sich, wie in Fig. 14 dargestellt, eine Stromverteilung derart, daß der Strang S1 zweimal von dem Strom I/2 durchflossen wird, gleiches gilt für den Strang S3, der Strang S5 wird zweimal von dem Strom I/2, allerdings in umgekehrter Richtung durchflossen, so daß in Summe der Strom I=0 auftritt, der Strang S2 wird zweimal vom Strom I/2 durchflossen, der Strang S4 in gleicher Weise und beim Strang S6 addieren sich die beiden in unterschiedlichen Richtungen fließenden Ströme I/2 zu I=0. Dies gibt die in Fig. 12 dargestellte Verteilung der Ströme in den einzelnen Strängen.

In diesem Fall addieren sich die Durchflutungen des Zahns 160 zu -2I, die des Zahns 162 zu 0, die des Zahns 164 zu 2I, die der Zähne 166, 168 und 170 zu 4,I, die des Zahns 172 zu 2I, die Zahns 174 zu 0, die des Zahns 176 zu -2I und die der Zähne 178, 180 und 182 zu -4I.

Das sich dabei ergebende Polfeld zeigt einen Pol P'+ zwischen den Zähnen 162 und 174 und einen Pol P'- zwischen den Zähnen 174 und 162.

Im Vergleich zu Fig. 11 ist somit zu erkennen, daß der zum Zeitpunkt T=0 zwischen den Zähnen 164 und 176 liegende Pol P+ um einen Zahn weiter nach links gewandert ist und nunmehr zwischen den Zähnen 162 und 174 liegt, allerdings hinsichtlich der Stärke der Durchflutung geringfügig abgenommen hat.

Durch Umkehr der Stromrichtung in dem Stromkreis SK2 wanden nun das Polfeld erneut weiter nach links, so daß der Pol P+ zwischen den Zähnen 160 und 172 liegt und nun wäre wiederum die zum Zeitpunkt T=0 dargestellte Form und Stärke aufweist.

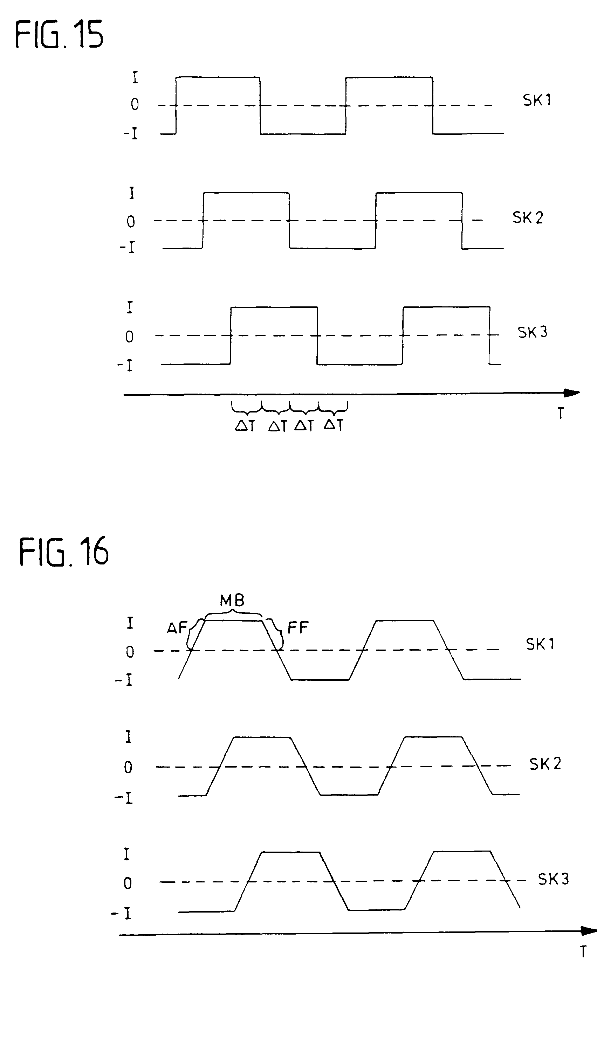

Der im Zusammenhang mit den Fig. 8 bis 14 erläuterten Aufbau des Polfeldes und die Bewegung der Pole ist im Prinzip mit einem periodisch oszillierenden Rechteckstrom generierbar, so daß die Schalter 70 und 72 entweder geöffnet oder geschlossen sein müssen. Eine derartige Ansteuerung ist beispielsweise in Fig. 15 für die Stromkreise SK1 bis SK3 dargestellt. Der Nachteil bei einer derartigen Speisung der Statorwicklung 60 ist darin zu sehen, daß in stets aufeinanderfolgenden Zeiträumen δT keine Änderung der magnetischer Durchflutung in den einzelnen Strängen S1 bis S6 erfolgt und somit während dieser Intervalle δT das Polfeld mit den Poler P+ und P- nicht wandert. Dies führt dazu, daß ein derart gespeister Asynchronmotor zumindest bei kleinen Drehzahlen ruckartig läuft.

Ein derartiges ruckartiges Laufen kann dadurch verhindert werden, daß man, wie in Fig. 16 dargestellt in den Stromkreisen SK1 bis SK3 einen Strom mit einer trapezähnlichen Halbwellenform fließen läßt, wobei eine Änderung des Stroms von -I nach +I während eines Phasenwinkels von 360° dividiert durch die Zahl der Stränge S erfolgt. Damit ist sichergestellt, daß sich zu jedem Zeitpunkt das Polfeld mit den Polen P+ und P- hinsichtlich Stärke und Lage verändert und weiter wandert, so daß ein ruckfreier Lauf entsteht.

Darüber hinaus stellt die Speisung der Stromkreise SK1 bis SK3 mit Strom mit trapezähnlicher Halbwellenform eine maximale Durchflutung der jeweiligen Zähne 160 bis 182 sicher.

Vergleicht man den Effektivstrombedarf bezogen auf die effektive Polinduktion des vorstehend beschriebenen Ausführungsbeispiels der erfindungsgemäßen Lösung mit dem für die Sternschaltung bei sinusförmiger Drehstromspeisung, so ergibt sich bei der vorliegenden Erfindung eine Reduktion des Effektivstrombedarfs um den Faktor 2,04 und somit eine entsprechende Entlastung der Leistungsstellerblöcke SB.

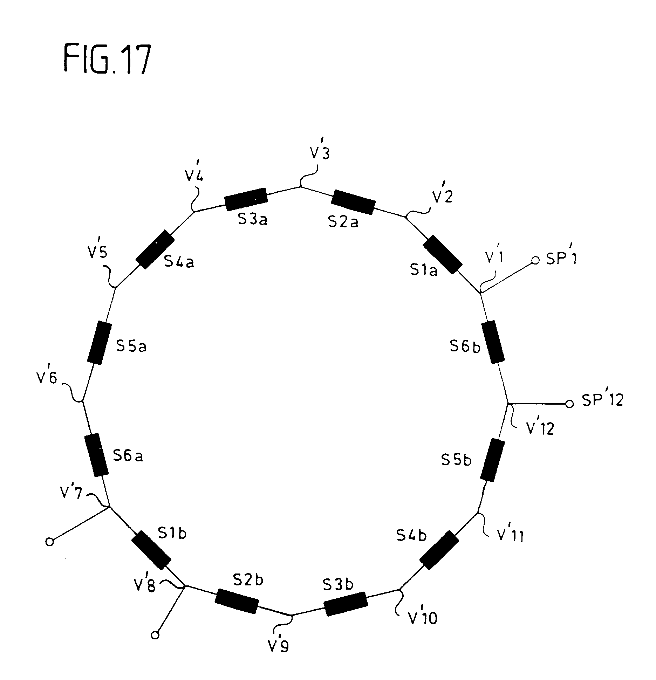

Das erfindungsgemäße Konzept ist bei Statorwicklungen 60 mit mehr als zwei Strängen einsetzbar, wobei die Stränge nicht als Ganzes zwischen zwei Verknüpfungspunkten der Polygonschaltung liegen müssen. So ist es beispielsweise, wie in Fig. 17 dargestellt, denkbar, jeden Strang S zu teilen und jeweils hälftige Stränge auf gegenüberliegende Seiten der Polygonschaltung zu legen. So ist beispielsweise in Fig. 17 eine 12-fache Polygonschaltung dargestellt, bei welcher zwischen einem Verknüpfungspunkt V'1 und einem Verknüpfungspunkt V'2 eine Teilwicklung S1A des Strangs S1 geschaltet und zwischen gegenüberliegenden Verknüpfungspunkten V'7 und V'8 die zweite Teilwicklung S1B des Strangs S1 darauf folgt zwischen den Verknüpfungspunkten V'2 und V'3 die Teilwicklung S2A des Strangs S2 und den Verknüpfungspunkten V'8 und V'9 die Teilwicklung S2B des Strangs S2 und so weiter.

Ferner ist bei diesen Teilwicklungen S1A und S1B der Stränge vorgesehen, daß jede Teilwicklung S1A oder S1B nicht um den ganzen Umfang des Stators 50 gewickelt ist, sondern jeweils um den halben Umfang des Stators 50.

Bei dieser Polygonschaltung gemäß dem zweiten Ausführungsbeispiel ist nun ebenfalls jeder Verknüpfungspunkt V' mit einem Speiseanschluß SP' verbunden, und jedem Speiseanschluß SP' ist ein Stellerblock SB in der im Zusammenhang mit dem ersten Ausführungsbeispiel beschriebenen Art und Weise zuzuordnen, wobei die Ansteuerung der Leistungsstellerblöcke SB in analoger Fortbildung des ersten Ausführungsbeispiels erfolgt, mit vorzugsweise ebenfalls oszillierenden Wechselströmen gleicher Periode und trapezförmiger Halbwellenform.

Bei diesem Ausführungsbeispiel läßt sich der Effektivstrombedarf bezogen auf die effektive Polinduktion gegenüber der Sinusstrom gespeisten Sternschaltung nach konventioneller Technik um den Faktor 3,65 reduzieren, das heißt die Leistungssteller sind bei gleicher Leistung wie bei der bekannten Drehstrommaschine lediglich für einen Maximalstrom auszulegen, der um den Faktor 3,65 kleiner ist.

## Patentansprüche

1. Elektrische Maschine umfassend
ein Maschinengehäuse (40),
einen in dem Maschinengehäuse (40) um eine Rotorachse (12) drehbar gelagerten Rotor (10),
einen in dem Maschinengehäuse (40) angeordneten Stator (50), eine dem Stator (50) oder dem Rotor (10) zugeordnete Wicklung (60),
und eine eine Felderzeugung in der Wicklung (60) steuernde Steuerschaltung mit einem Gleichstromzwischenkreis (108,110) und mindestens einem zwischen diesem und der Wicklung (60) angeordneten Leistungssteller (SB) sowie einer Ansteuerung (80) für den Leistungssteller, wobei
alle die Felderzeugung in der Wicklung (60) steuernden Leistungssteller (SB) in dem Maschinengehäuse (40) angeordnet sind,
**dadurch gekennzeichnet,**
**daß** die Wicklung (60) mindestens eine geradzahlige Anzahl N von vier oder mehr Teilwicklungen (S) umfaßt, wobei die Teilwicklungen (S) in Form einer Polygonschaltung so zusammengeschaltet sind, daß die Zahl der Ecken der Polygonschaltung der Zahl der Teilwicklungen (S) entspricht und jede Ecke ein Verknüpfungspunkt (V) von in der Polygonschaltung aufeinanderfolgenden Teilwicklungen (S) darstellt, so daß jeweils zwischen zwei aufeinanderfolgenden Verknüpfungspunkten (V) je eine Teilwicklung liegt,
**daß** jeder Verknüpfungspunkt (V) einen Speiseanschluß (SP) aufweist, wobei die Speiseanschlüsse (SP) einander gegenüberliegender Verknüpfungspunkte (V) der Polygonschaltung ein Anschlußpaar bilden, zwischen welchem jeweils zwei parallel geschaltete Sätze (S1, S3, S5; S6, S4, S2) mit jeweils derselben Zahl hintereinandergeschalteter Teilwicklungen (S) liegen; und
**daß** die Anschlußpaare der Polygonschaltung in getrennten, durch mindestens einen der Leistungssteller (SB) gesteuerten Stromkreisen (SK1, SK2, SK3) liegen und jeder Stromkreis (SK1, SK2, SK3) einen sich periodisch ändernden und sich auf die beiden Sätze von Teilwicklungen verteilenden Strom durch die Wicklung fließen läßt.

2. Maschine nach Anspruch 1, **dadurch gekennzeichnet, daß** die Wicklung (60) mehrere Stränge (S) aufweist und daß zur Steuerung der Felderzeugung in jedem Strang (S) für diesen mindestens ein Leistungssteller (SB) vorgesehen ist.

3. Maschine nach Anspruch 1 oder 2, **dadurch gekennzeichnet, daß** die Leistungssteller (SB) einzeln um die Rotorachse (12) herum verteilt angeordnet sind.

4. Maschine nach Anspruch 3, **dadurch gekennzeichnet, daß** die Leistungssteller (SB) in gleichen Winkelabständen um die Rotorachse (12) herum verteilt angeordnet sind.

5. Maschine nach Anspruch 3 oder 4, **dadurch gekennzeichnet, daß** die Leistungssteller (SB) in gleichem radialen Abstand von der Rotorachse (12) angeordnet sind.

6. Maschine nach einem der voranstehenden Ansprüche, **dadurch gekennzeichnet, daß** alle Leistungssteller (SB) an demselben Gleichstromzwischenkreis (108, 110) angeschlossen sind.

7. Maschine nach Anspruch 6, **dadurch gekennzeichnet, daß** der Gleichstromzwischenkreis zwei um die Rotorachse (12) zumindest teilweise umlaufend angeordnete und parallel zueinander verlaufende Leiterbügel (108, 110) umfaßt, an welchen die Leistungssteller (SB) angeschlossen sind.

8. Maschine nach Anspruch 7, **dadurch gekennzeichnet, daß** die Leiterbügel (108, 110) in einer senkrecht zur Rotorachse (12) verlaufenden Ebene (112) liegen.

9. Maschine nach Anspruch 8, **dadurch gekennzeichnet, daß** die Leiterbügel (108, 110) als Flachleiter ausgebildet sind.

10. Maschine nach einem der Ansprüche 7 bis 9, **dadurch gekennzeichnet, daß** die Leistungssteller (SB) Anschlüsse (120, 122) aufweisen, die direkt mit den Leiterbügeln (108, 110) verbunden sind.

11. Maschine nach einem der Ansprüche 7 bis 10, **dadurch gekennzeichnet, daß** die Leiterbügel als Ringleiter (108, 110) ausgebildet sind.

12. Maschine nach Anspruch 11, **dadurch gekennzeichnet, daß** die zwei Ringleiter (108, 110) konzentrisch zueinander angeordnet sind.

13. Maschine nach einem der Ansprüche 8 bis 12, **dadurch gekennzeichnet, daß** die Leistungssteller (SB) auf einer Seite der Ebene (112) angeordnet sind, in welcher die Leiterbügel (108, 110) liegen.

14. Maschine nach einem der Ansprüche 8 bis 13, **dadurch gekennzeichnet, daß** die Zwischenspeicherkondensatoren (140) im Maschinengehäuse (40) angeordnet sind.

15. Maschine nach Anspruch 14, **dadurch gekennzeichnet, daß** jedem Leistungssteller (SB) ein Zwischenkreisspeicherkondensator (140) zugeordnet ist.

16. Maschine nach Anspruch 14 oder 15, **dadurch gekennzeichnet, daß** auf der den Leistungsstellern (SB) gegenüberliegenden Seite der Ebene (112) die Zwischenkreisspeicherkondensatoren (140) sitzen.

17. Maschine nach einem der voranstehenden Ansprüche, **dadurch gekennzeichnet, daß** die Stellersteuerung (80) im Maschinengehäuse (40) angeordnet ist.

18. Maschine nach Anspruch 17, **dadurch gekennzeichnet, daß** die Stellersteuerung (80) nahe der Leistungssteller (SB) angeordnet ist.

19. Maschine nach Anspruch 18, **dadurch gekennzeichnet, daß** die Stellersteuerung (80) in Zwischenräumen zwischen den Zwischenkreisspeicherkondensatoren (140) angeordnet ist.

20. Maschine nach Anspruch 18 oder 19, **dadurch gekennzeichnet, daß** die Stellersteuerung (80) nahe der Leiterbügel (108, 110) sitzt.

21. Maschine nach einem der voranstehenden Ansprüche, **dadurch gekennzeichnet, daß** die Leistungssteller (SB) gekühlt sind.

22. Maschine nach Anspruch 21, **dadurch gekennzeichnet, daß** die Leistungssteller (SB) Kühlkörper (96) aufweisen.

23. Maschine nach Anspruch 21 oder 22, **dadurch gekennzeichnet, daß** die Leistungssteller (SB) in thermischem Kontakt mit einem im Maschinengehäuse (40) angeordneten Kühlelement (87) stehen.

24. Maschine nach Anspruch 23, **dadurch gekennzeichnet, daß** das Kühlelement (87) von dem flüssigen Kühlmedium durchströmt ist.

25. Maschine nach Anspruch 24, **dadurch gekennzeichnet, daß** die Leistungssteller (SB) einen Kühlkörper (96) aufweisen, welcher in einen von dem flüssigen Kühlmedium durchströmten Kühlkanal (86) des Kühlelements (87) hineinragt.

26. Maschine nach einem der Ansprüche 23 bis 25, **dadurch gekennzeichnet, daß** die Leistungssteller (SB) in dem Maschinengehäuse (40) von dem Kühlelement (87) gehalten sind.

27. Maschine nach einem der Ansprüche 24 bis 26, **dadurch gekennzeichnet, daß** das Kühlelement (87) Teil des Maschinengehäuses (40) ist.

28. Maschine nach Anspruch 27, **dadurch gekennzeichnet, daß** das Kühlelement durch einen Wandbereich des Maschinengehäuses (40) gebildet wird.

29. Maschine nach einem der Ansprüche 25 bis 28, **dadurch gekennzeichnet, daß** der Leistungssteller eine Abdeckung (94) für eine Öffnung (100) des Kühlkanals (86) im Kühlelement (87) bildet.

30. Maschine nach einem der Ansprüche 24 bis 29, **dadurch gekennzeichnet, daß** das Kühlelement (87) in einem Kühlungskreislauf des Stators (50) integriert ist.

31. Maschine nach einem der voranstehenden Ansprüche, **dadurch gekennzeichnet, daß** die Wicklung (60) eine Statorwicklung ist.

32. Maschine nach einem der voranstehenden Ansprüche, **dadurch gekennzeichnet, daß** die Leistungssteller (SB) zwischen dem Stator (50) und der Rotorachse (12) sitzen.

33. Maschine nach einem der voranstehenden Ansprüche, **dadurch gekennzeichnet, daß** der Rotor (10) eine Kurzschlußwicklung aufweist.

34. Maschine nach Anspruch 1, **dadurch gekennzeichnet, daß** sich in jedem Stromkreis (SK) der Strom (I) im wesent lichen gleichmäßig auf die beiden Sätze von Teilwicklungen (S) der Wicklung (60) verteilt.

35. Maschine nach Anspruch 1 oder 34, **dadurch gekennzeichnet, daß** in der Polygonschaltung einander gegenüberliegende Teilwicklungen (S1, S2; S3, S5; S4, S6) im wesentlichen gleich ausgebildet sind.

36. Maschine nach Anspruch 35, **dadurch gekennzeichnet, daß** alle Teilwicklungen (S) der Wicklung (60) im wesentlichen gleich ausgebildet sind.

37. Maschine nach einem der Ansprüche 1, 34 bis 36, **dadurch gekennzeichnet, daß** Anfang (AS1, AS2 etc.) und Ende (ES1, ES2 etc.) in der Polygonschaltung aufeinanderfolgender Teilwicklungen (S1, S2, etc.) um ganzzahlige Zahlen von Polteilungen (62, 62') der Wicklung (60) gegeneinander versetzt angeordnet sind.

38. Maschine nach Anspruch 37, **dadurch gekennzeichnet, daß** Anfang (AS1, AS2 etc.) und Ende (ES1, ES2 etc.) in der Polygonschaltung aufeinanderfolgender Teilwicklungen (S1, S2 etc.) um mindestens die ganzzahlige Zahl von Polteilungen (62, 62') der Wicklung (60) versetzt sind, die der nächst kleineren ganzen Zahl des Quotienten aus der Polzahl und der Zahl der Stränge (S) entspricht.

39. Maschine nach Anspruch 37 oder 38, **dadurch gekennzeichnet, daß** Anfang (AS1, AS2 etc.) und Ende (ES1, ES2 etc.) in der Polygonschaltung aufeinanderfolgender Teilwicklungen (S1, S2 etc.) um höchstens die ganzzahlige Zahl von Polteilungen versetzt sind, die der nächst größeren ganzen Zahl des Quotienten aus Polzahl und Zahl der Stränge (S) entspricht.

40. Maschine nach einem der Ansprüche 1, 34 bis 39, **dadurch gekennzeichnet, daß** jede Teilwicklung (S) der Wicklung (60) einen Strang bildet.

41. Maschine nach einem der Ansprüche 1, 34 bis 39, **dadurch gekennzeichnet, daß** zwei in der Polygonschaltung einander gegenüberliegende Teilwicklungen (Sla, S1b, S2a, S2b etc.) einen Strang bilden.

42. Maschine nach einem der Ansprüche 1, 34 bis 41, **dadurch gekennzeichnet, daß** die Ströme (I) in allen Stromkreisen (SK1, SK2, SK3) dieselbe Periodendauer aufweisen.

43. Maschine nach einem der Ansprüche 1, 34 bis 42, **dadurch gekennzeichnet, daß** die Ströme (I) in allen Stromkreisen (SK1, SK2, SK3) dieselbe Halbwellenform aufweisen.

44. Maschine nach einem der Ansprüche 1, 34 bis 43, **dadurch gekennzeichnet, daß** die Ströme (I) in allen Stromkreisen (SK1, SK2, SK3) im wesentlichen dieselbe Maximalamplitude aufweisen.

45. Maschine nach einem der Ansprüche 1, 34 bis 44, **dadurch gekennzeichnet, daß** der sich periodisch ändernde Strom (I) in einem ausgewählten Stromkreis (SK1) gegenüber dem Strom in einem nächstliegenden Stromkreis (SK2, SK3) phasenverschoben ist.

46. Maschine nach einem der Ansprüche 1, 34 bis 45, **dadurch gekennzeichnet, daß** in jedem Stromkreis (SK1, SK2, SK3) an jedem Speiseanschluß (SP1, SP2, SP3, SP4, SP5, SP6) ein Leistungssteller (SB1, SB2, SB3, SB4, SB5, SB6) vorgesehen ist und daß die beiden Leistungssteller (SB1, SB2, SB3, SB4, SBS, SB6) in jedem Stromkreis (SK1, SK2, SK3) durch eine gemeinsame Stellersteuerung (80) angesteuert sind.

## Claims

1. Electric machine comprising
a machine casing (40),
a rotor (10) mounted rotatably about a rotor axis (12) in the machine casing (40),
a stator (50) arranged in the machine casing (40), a winding (60) assigned to the stator (50) or the rotor (10),
and a control circuit controlling a field generation in the winding (60) with a direct-current intermediate circuit (108, 110) and at least one power regulator (SB) arranged between the latter and the winding (60) and also a driver (80) for the power regulator, wherein all power regulators (SB) controlling the field generation in the winding (60) are arranged in the machine casing (40),
**characterized in that**
the winding (60) comprises at least an even number N of four or more part-windings (S), the part-windings (S) being connected together in a polygonal connection so that the number of vertices of the polygonal connection corresponds to the number of part-windings (S) and each vertex constitutes an interconnection-point (V) of part-windings (S) succeeding one another in the polygonal connection so that one part-winding lies between every two successive interconnection-points (V);
each interconnection-point (V) has a feed connection (SP), the feed connections (SP) of opposite interconnection-points (V) of the polygonal connection forming a connection-pair, with two parallel-connected sets (S1, S3, S5; S6, S4, S2) each with the same number of part-windings (S) connected one after another lying between every such connection-pair; and
the connection-pairs of the polygonal connection lie in separate circuits (SK1, SK2, SK3) controlled by at least one of the power regulators (SB) and each circuit (SK1, SK2, SK3) passes through the winding a periodically changing current that is distributed to the two sets of part-windings.

2. Machine according to Claim 1, **characterized in that** the winding (60) has a plurality of phase windings (S) and **in that** at least one power regulator (SB) is provided for each phase winding (S) to control the field generation **in that** phase winding.

3. Machine according to Claim 1 or 2, **characterized in that** the power regulators (SB) are separately arranged around the rotor axis (12).

4. Machine according to Claim 3, **characterized in that** the power regulators (SB) are distributed at equal angular intervals around the rotor axis (12).

5. Machine according to Claim 3 or 4, **characterized in that** the power regulators (SB) are arranged at an equal radial distance from the rotor axis (12).

6. Machine according to any one of the preceding claims, **characterized in that** all power regulators (SB) are connected to the same direct-current intermediate circuit (108, 110).

7. Machine according to Claim 6, **characterized in that** the direct-current intermediate circuit comprises two bow conductors (108, 110) to which the power regulators (SB) are connected, arranged at least partially encircling the rotor axis (12) and extending parallel with each other.

8. Machine according to Claim 7, **characterized in that** the bow conductors (108, 110) lie in a plane (112) extending perpendicularly to the rotor axis (12).

9. Machine according to Claim 8, **characterized in that** the bow conductors (108, 110) are formed as flat conductors.

10. Machine according to any one of Claims 7 to 9, **characterized in that** the power regulators (SB) have connections (120, 122) which are directly connected to the bow conductors (108, 110).

11. Machine according to any one of Claims 7 to 10, **characterized in that** the bow conductors are formed as ring conductors (108, 110).

12. Machine according to Claim 11, **characterized in that** the two ring conductors (108, 110) are arranged concentrically with each other.

13. Machine according to any one of Claims 8 to 12, **characterized in that** the power regulators (SB) are arranged on one side of the plane (112) in which the bow conductors (108, 110) lie.

14. Machine according to any one of Claims 8 to 13, **characterized in that** the buffer capacitors (140) are arranged in the machine casing (40).

15. Machine according to Claim 14, **characterized in that** a buffer capacitor (140) is assigned to each power regulator (SB).

16. Machine according to Claim 14 or 15, **characterized in that** the buffer capacitors (140) are mounted on the opposite side of the plane (112) to the power regulators (SB).

17. Machine according to any one of the preceding daims, **characterized in that** the regulator driver (80) is arranged in the machine casing (40).

18. Machine according to Claim 17, **characterized in that** the regulator driver (80) is arranged near the power regulators (SB).

19. Machine according to Claim 18, **characterized in that** the regulator driver (80) is arranged in interstices between the buffer capacitors (140).

20. Machine according to Claim 18 or 19, **characterized in that** the regulator driver (80) is mounted near the bow conductors (108, 110).

21. Machine according to any one of the preceding claims, **characterized in that** the power regulators (SB) are cooled.

22. Machine according to Claim 21, **characterized in that** the power regulators (SB) have heat sinks (96).

23. Machine according to Claim 21 or 22, **characterized in that** the power regulators (SB) are in thermal contact with a cooling element (87) arranged in the machine casing (40).

24. Machine according to Claim 23, **characterized in that** liquid coolant flows through the cooling element (87).

25. Machine according to Claim 24, **characterized in that** the power regulators (SB) have a heat sink (96) which projects into a cooling duct (86) of the cooling element (87) through which the liquid coolant flows.

26. Machine according to any one of Claims 23 to 25, **characterized in that** the power regulators (SB) are held in the machine casing (40) by the cooling element (87).

27. Machine according to any one of Claims 24 to 26, **characterized in that** the cooling element (87) is part of the machine casing (40).

28. Machine according to Claim 27, **characterized in that** the cooling element is formed by a wall area of the machine casing (40).

29. Machine according to any one of Claims 25 to 28, **characterized in that** the power regulator forms a cover (94) for an opening (100) of the cooling duct (86) in the cooling element (87).

30. Machine according to any one of Claims 24 to 29, **characterized in that** the cooling element (87) is incorporated in a cooling circuit of the stator (50).

31. Machine according to any one of the preceding claims, **characterized in that** the winding (60) is a stator winding.

32. Machine according to any one of the preceding claims, **characterized in that** the power regulators (SB) are mounted between the stator (50) and the rotor axis (12).

33. Machine according to any one of the preceding claims, **characterized in that** the rotor (10) has a short-circuit winding.

34. Machine according to Claim 1, **characterized in that** the current (I) in each circuit (SK) is distributed substantially equally to the two sets of part-windings (S) of the winding (60).

35. Machine according to Claim 1 or 34, **characterized in that** part-windings opposite one another in the polygonal connection (S1, S2; S3, S5; S4, S6) have essentially the same configuration.

36. Machine according to Claim 35, **characterized in that** all part-windings (S) of the winding (60) have essentially the same configuration.

37. Machine according to any one of Claims 1 and 34 to 36, **characterized in that** the starts (AS1, AS2 etc.) and ends (ES1, ES2 etc.) of successive part-windings (S1, S2, etc.) in the polygonal connection are staggered with respect to one another by whole numbers of pole pitches (62, 62') of the winding (60).

38. Machine according to Claim 37, **characterized in that** the starts (AS1, AS2 etc.) and ends (ES1, ES2 etc.) of successive part-windings (S1, S2, etc.) in the polygonal connection are staggered by at least the whole number of pole pitches (62, 62') of the winding (60) that is equal to the next smaller whole-number quotient obtained by dividing the number of poles by the number of phase windings (S).

39. Machine according to Claim 37 or 38, **characterized in that** the starts (AS1, AS2 etc.) and ends (ES1, ES2 etc.) of successive part-windings (S1, S2, etc.) in the polygonal connection are staggered by not more than the whole number of pole pitches that is equal to the next larger whole-number quotient obtained by dividing the number of poles by the number of phase windings (S).

40. Machine according to any one of Claims 1 and 34 to 39, **characterized in that** every part-winding (S) of the winding (60) forms a phase winding.

41. Machine according to any one of Claims 1 and 34 to 39, **characterized in that** two part-windings opposite one another in the polygonal connection (S1a, S1b, S2a, S2b, etc.) form a phase winding.

42. Machine according to any one of Claims 1 and 34 to 41, **characterized in that** the currents (I) in all circuits (SK1, SK2, SK3) have the same period.

43. Machine according to any one of Claims 1 and 34 to 42, **characterized in that** the currents (I) in all circuits (SK1, SK2, SK3) have the same half-wave form.

44. Machine according to any one of Claims 1 and 34 to 43, **characterized in that** the currents (I) in all circuits (SK1, SK2, SK3) have substantially the same maximum amplitude.

45. Machine according to any one of Claims 1 and 34 to 44, **characterized in that** the periodically changing current (I) in a selected circuit (SK1) is phase-shifted with respect to the current in the nearest-adjacent circuit (SK2, SK3).

46. Machine according to any one of Claims 1 and 34 to 45, **characterized in that** in each circuit (SK1, SK2, SK3) a power regulator (SB1, SB2, SB3, SB4, SB5, SB6) is provided at each feed connection (SP1, SP2, SP3, SP4, SP5, SP6) and **in that** the two power regulators (SB1, SB2, SB3, SB4, SB5, SB6) in each circuit (SK1, SK2, SK3) are driven by a common regulator drive (80).

## Revendications

1. Moteur électrique comprenant
- un carter de moteur (40),
- un rotor (10) monté dans le carter (40) pour pouvoir tourner autour d'un axe de rotor (12),
- un stator (50) disposé dans le carter (40),
- un enroulement (60) associé au stator (50) ou au rotor (10),
- et un circuit de commande qui commande une production de champ dans l'enroulement (60) et qui comporte un circuit intermédiaire à courant continu (108, 110), au moins un régulateur de puissance (SB) disposé entre celui-ci et l'enroulement (60), et une commande (80) pour ledit régulateur de puissance,
étant précisé que tous les régulateurs de puissance (SB) qui commandent la production de champ dans l'enroulement (60) sont disposés dans le carter de moteur (40),
**caractérisé en ce que** l'enroulement (60) comprend au moins un nombre pair N, égal à quatre ou plus, d'enroulements partiels (S), ces enroulements partiels (S) étant reliés en forme de montage en polygone de telle sorte que le nombre de coins du montage en polygone corresponde au nombre d'enroulements partiels (S) et que chaque coin représente un point de liaison (V) d'enroulements partiels (S) qui se suivent dans le montage en polygone, de sorte qu'entre deux points de liaison (V) qui se suivent, il y a toujours un enroulement partiel,
**en ce que** chaque point de liaison (V) présente un raccordement d'alimentation (SP), les raccordements d'alimentation (SP) de points de liaison (V) opposés du montage en polygone formant une paire de raccordements entre lesquels se trouvent deux séries montées en parallèle (S1, S3, S5 ; S6, S4, S2) avec le même nombre d'enroulements partiels (S) montés les uns derrière les autres, et
**en ce que** les paires de raccordement du montage en polygone se trouvent dans des circuits électriques séparés (SK1, SK2, SK3) commandés par l'un au moins des régulateurs de puissance (SB), et chaque circuit électrique (SK1, SK2, SK3) laisse passer dans l'enroulement un courant qui varie périodiquement et qui se répartit sur les deux séries d'enroulements partiels.

2. Moteur selon la revendication 1, **caractérisé en ce que** l'enroulement (60) présente plusieurs conducteurs de phase (S) et **en ce qu'**il est prévu pour commander la production de champ dans chaque conducteur de phase (S), pour celui-ci, au moins un régulateur de puissance (SB).

3. Moteur selon la revendication 1 ou 2, **caractérisé en ce que** les régulateurs de puissance (SB) sont répartis individuellement autour de l'axe de rotor (12).

4. Moteur selon la revendication 3, **caractérisé en ce que** les régulateurs de puissance (SB) sont répartis autour de l'axe (12) suivant des écarts angulaires égaux.

5. Moteur selon la revendication 3 ou 4, **caractérisé en ce que** les régulateurs de puissance (SB) sont disposés à la même distance radiale de l'axe de rotor (12).

6. Moteur selon l'une des revendications précédentes, **caractérisé en ce que** tous les régulateurs de puissance (SB) sont raccordés au même circuit intermédiaire à courant continu (108, 110).

7. Moteur selon la revendication 6, **caractérisé en ce que** le circuit intermédiaire à courant continu comprend deux étriers conducteurs parallèles (108, 110) qui entourent au moins partiellement l'axe de rotor (12) et auxquels sont raccordés les régulateurs de puissance (SB).

8. Moteur selon la revendication 7, **caractérisé en ce que** les étriers conducteurs (108, 110) se trouvent dans un plan (112) perpendiculaire à l'axe de rotor (12).

9. Moteur selon la revendication 8, **caractérisé en ce que** les étriers conducteurs (108, 110) sont conçus comme des conducteurs plats.

10. Moteur selon l'une des revendications 7 à 9, **caractérisé en ce que** les régulateurs de puissance (SB) comportent des raccordements (120, 122) qui sont reliés directement aux étriers conducteurs (108, 110).

11. Moteur selon l'une des revendications 7 à 10, **caractérisé en ce que** les étriers conducteurs sont conçus comme des conducteurs annulaires (108, 110).

12. Moteur selon la revendication 11, **caractérisé en ce que** les deux conducteurs annulaires (108, 110) sont concentriques.

13. Moteur selon l'une des revendications 8 à 12, **caractérisé en ce que** les régulateurs de puissance (SB) sont disposés sur un côté du plan (112) dans lequel se trouvent les étriers conducteurs (108, 110).

14. Moteur selon l'une des revendications 8 à 13, **caractérisé en ce que** les condensateurs de stockage de circuit intermédiaire (140) sont disposés dans le carter de moteur (40).

15. Moteur selon la revendication 14, **caractérisé en ce qu'**un condensateur de stockage de circuit intermédiaire (140) est associé à chaque régulateur de puissance (SB).

16. Moteur selon la revendication 14 ou 15, **caractérisé en ce que** les condensateurs de stockage de circuit intermédiaire (140) se trouvent sur le côté du plan (112) opposé aux régulateurs de puissance (SB).

17. Moteur selon l'une des revendications précédentes, **caractérisé en ce que** la commande de régulateur (80) est disposée dans le carter de moteur (40).

18. Moteur selon la revendication 17, **caractérisé en ce que** la commande de régulateur (80) est disposée près du régulateur de puissance (SB).

19. Moteur selon la revendication 18, **caractérisé en ce que** la commande de régulateur (80) est disposée dans des espaces intermédiaires entre les condensateurs de stockage de circuit intermédiaire (140).

20. Moteur selon la revendication 18 ou 19, **caractérisé en ce que** la commande de régulateur (80) est placée près des étriers conducteurs (108, 110).

21. Moteur selon l'une des revendications précédentes, **caractérisé en ce que** les régulateurs de puissance (SB) sont refroidis.

22. Moteur selon la revendication 21, **caractérisé en ce que** les régulateurs de puissance (SB) comportent des corps de refroidissement (96).

23. Moteur selon la revendication 21 ou 22, **caractérisé en ce que** les régulateurs de puissance (SB) sont en contact thermique avec un élément de refroidissement (87) disposé dans le carter de moteur (40).

24. Moteur selon la revendication 23, **caractérisé en ce que** l'élément de refroidissement (87) est traversé par le produit refroidisseur liquide.

25. Moteur selon la revendication 24, **caractérisé en ce que** les régulateurs de puissance (SB) comportent un corps de refroidissement (96) qui pénètre dans un conduit de refroidissement (86) de l'élément de refroidissement (87) qui est traversé par le produit de refroidissement liquide.

26. Moteur selon l'une des revendications 23 à 25, **caractérisé en ce que** les régulateurs de puissance (SB) sont supportés dans le carter de moteur (40) par l'élément de refroidissement (87).

27. Moteur selon l'une des revendications 24 à 26, **caractérisé en ce que** l'élément de refroidissement (87) fait partie du carter de moteur (40).

28. Moteur selon la revendication 27, **caractérisé en ce que** l'élément de refroidissement est défini par une zone de paroi du carter de moteur (40).

29. Moteur selon l'une des revendications 25 à 28, **caractérisé en ce que** le régulateur de puissance définit un recouvrement (94) pour une ouverture (100) du conduit de refroidissement (86) prévu dans l'élément de refroidissement (87).

30. Moteur selon l'une des revendications 24 à 29, **caractérisé en ce que** l'élément de refroidissement (87) est intégré dans un circuit de refroidissement du stator (50).

31. Moteur selon l'une des revendications précédentes, **caractérisé en ce que** l'enroulement (60) est un enroulement de stator.

32. Moteur selon l'une des revendications précédentes, **caractérisé en ce que** les régulateurs de puissance (SB) sont placés entre le stator (50) et l'axe de rotor (12).

33. Moteur selon l'une des revendications précédentes, **caractérisé en ce que** le rotor (10) comporte un enroulement à court-circuit.

34. Moteur selon la revendication 1, **caractérisé en ce que** dans chaque circuit électrique (SK), le courant (I) se répartit globalement uniformément sur les deux séries d'enroulements partiels (S) de l'enroulement (60).

35. Moteur selon la revendication 1 ou 34, **caractérisé en ce que** les enroulements partiels (S1, S2 ; S3, S5 ; S4, S6) opposés dans le montage en polygone sont globalement identiques.

36. Moteur selon la revendication 35, **caractérisé en ce que** tous les enroulements partiels (S) de l'enroulement (60) sont globalement identiques.

37. Moteur selon l'une des revendications 1, 34 à 36, **caractérisé en ce que** le début (AS1, AS2, etc.) et la fin (ES1, ES2, etc.) d'enroulements partiels (S1, S2, etc.) qui se suivent dans le montage en polygone sont décalés suivant des nombres entiers de pas polaires (62, 62') de l'enroulement (60).

38. Moteur selon la revendication 37, **caractérisé en ce que** le début (AS1, AS2, etc.) et la fin (ES1, ES2, etc.) d'enroulements partiels (S1, S2, etc.) qui se suivent dans le montage en polygone sont décalés au moins suivant le nombre entier de pas polaires (62, 62') de l'enroulement (60), qui correspond au nombre entier directement inférieur au quotient du nombre de pôles et du nombre de conducteurs de phase (S).

39. Moteur selon la revendication 37 ou 38, **caractérisé en ce que** le début (AS1, AS2, etc.) et la fin (ES1, ES2, etc.) d'enroulements partiels (S1, S2, etc.) qui se suivent dans le montage en polygone sont décalés au maximum suivant le nombre entier de pas polaires, qui correspond au nombre entier directement supérieur au quotient du nombre de pôles et du nombre de conducteurs de phase (S).

40. Moteur selon l'une des revendications 1, 34 à 39, **caractérisé en ce que** chaque enroulement partiel (S) de l'enroulement (60) forme un conducteur de phase.

41. Moteur selon l'une des revendications 1, 34 à 39, **caractérisé en ce que** deux enroulements partiels (S1a, S1b, S2a, S2b, etc.) opposés, dans le montage en polygone, forment un conducteur de phase.

42. Moteur selon l'une des revendications 1, 34 à 41, **caractérisé en ce que** les courants (I) présents dans tous les circuits électriques (SK1, SK2, SK3) présentent la même période.

43. Moteur selon l'une des revendications 1, 34 à 42, **caractérisé en ce que** les courants (I) présents dans tous les circuits électriques (SK1, SK2, SK3) présentent la même forme de demi-onde.

44. Moteur selon l'une des revendications 1, 34 à 43, **caractérisé en ce que** les courants (I) présents dans tous les circuits électriques (SK1, SK2, SK3) présentent globalement la même amplitude maximale.

45. Moteur selon l'une des revendications 1, 34 à 44, **caractérisé en ce que** le courant (I) qui varie périodiquement est déphasé dans un circuit électrique (SK1) sélectionné, par rapport au courant dans un circuit voisin (SK2, SK3).

46. Moteur selon l'une des revendications 1, 34 à 45, **caractérisé en ce que** dans chaque circuit électrique (SK1, SK2, SK3), un régulateur de puissance (SB1, SB2, SB3, SB4, SB5, SB6) est prévu au niveau de chaque raccordement d'alimentation (SP1, SP2, SP3, SP4, SP5, SP6), et **en ce que** les deux régulateurs de puissance (SB1, SB2, SB3, SB4, SB5, SB6) sont commandés dans chaque circuit électrique (SK1, SK2, SK3) par une commande de régulateur commune (80).
